# EUROPEAN PATENT SPECIFICATION

(11) **EP 3 279 988 B1**
(45) Date of publication and mention of the grant of the patent: **02.10.2019**
(21) Application number: 16771767.7
(22) Date of filing: 28.03.2016
(51) Int. Cl.: H01M 8/0271, H01M 8/2483, H01M 8/2432, H01M 8/124

(54) **FLAT PLATE TYPE FUEL CELL**
BRENNSTOFFZELLE VOM FLACHPLATTENTYP
PILE À COMBUSTIBLE DE TYPE PLAQUE PLATE

(30) Priority: 31.03.2015 JP 2015073680
(43) Date of publication of application: 07.02.2018
(73) Proprietor: NGK Spark Plug Co., Ltd., Nagoya-shi, Aichi 467-8525 (JP)
(72) Inventor: YOSHIZAKI, Hirotoshi, Nagoya-shi Aichi 467-8525 (JP); SHICHIDA, Takafumi, Nagoya-shi Aichi 467-8525 (JP)
(74) Representative: Grünecker Patent- und Rechtsanwälte PartG mbB
(86) International application number: PCT/JP2016/001779
(87) International publication number: WO 2016/157879

(56) References cited:
- WO-A1-99/26304
- WO-A1-2013/065757
- JP-A- H10 134 833
- JP-A- 2011 258 396
- US-A1- 2005 214 626
- US-A1- 2012 301 806
- US-A1- 2014 141 352

## Description

### TECHNICAL FIELD

The present invention relates to a flat plate type fuel cell (hereinafter referred to as a "planar fuel cell apparatus") which includes a single fuel cell having an anode layer, a cathode layer, and a solid electrolyte layer sandwiched therebetween.

### BACKGROUND ART

A conventionally known fuel cell apparatus is, for example, a solid oxide fuel cell (hereinafter, may be referred to as SOFC) apparatus which uses solid electrolyte (solid oxide).

The SOFC apparatus uses, for example, a planar single fuel cell having an anode layer provided on one side of a solid electrolyte layer and in contact with fuel gas, and a cathode layer provided on the other side of the solid electrolyte layer and in contact with oxidizer gas (e.g., air).

A fuel gas chamber into which fuel gas is introduced is provided on an anode layer side of the single fuel cell, and an oxidizer gas chamber into which oxidizer gas is introduced is provided on a cathode layer side of the single fuel cell. The single fuel cell, the fuel gas chamber, the oxidizer gas chamber, etc., constitute an electricity generation unit, which is a unit of electricity generation.

Further, in order to obtain an intended voltage, there has been developed a fuel cell stack in which a plurality of single fuel cells (accordingly, electricity generation units) are stacked with interconnectors intervening therebetween (i.e., a fuel cell stack composed of a plurality of tiers).

Also, in recent years, in order to improve the output voltage of the fuel cell apparatus, there has been disclosed a fuel cell stack which combines tiers (electricity generation units) different in terms of fuel gas flow channels for uniformizing the in-plane temperature distribution of the single fuel cells (cell in-plane temperature distribution) (see Patent Document 1).

Further, there has been disclosed a technique for improving (uniformizing) the cell in-plane temperature distribution by alternating, tier by tier, flow directions of fuel gas and oxidizer gas flowing through respective flow channels (see Patent Document 2).

Further cross flow fuel cells are known from US 2014/141352 A1, US 2005/214626 A1 and US 2012/301806 A1.

### PRIOR ART DOCUMENTS

### PATENT DOCUMENTS

Patent Document 1: Japanese Patent Application Laid-Open (*kokai*) No. 2002-141081
Patent Document 2: Japanese Patent Application Laid-Open (*kokai*) No. S62-080972

### SUMMARY OF THE INVENTION

### PROBLEM TO BE SOLVED BY THE INVENTION

The techniques described in Patent Documents 1 and 2 attempt to uniformize cell in-plane temperature distribution by changing gas flow directions tier by tier (electricity generation unit by electricity generation unit) in the fuel cell stacks; however, their attempts have not always resulted in sufficient achievement.

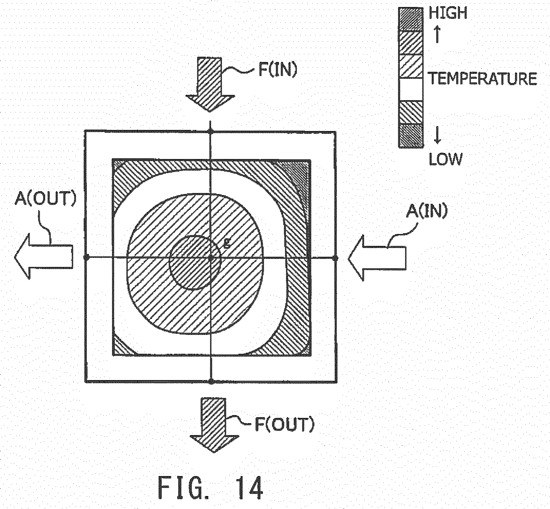

For example, as exemplified in FIG. 14, in the case of cross-flow design in which a fuel gas flow channel (a flow channel from F(IN) to F(OUT)) and an oxidizer gas flow channel (a flow channel from A(IN) to A(OUT)) are orthogonalized, cell in-plane temperature distribution may become nonuniform in some cases.

Specifically, the technique of merely reversing the direction of fuel gas in different tiers as described in Patent Document 1 and the technique of alternating the directions of fuel gas and oxidizer gas tier by tier as described in Patent Document 2 have encountered difficulty in sufficiently uniformizing cell in-plane temperature distribution.

In the case of a failure to sufficiently uniformize cell in-plane temperature, even though the output voltage is high in an early stage of use after manufacture, performance has been apt to deteriorate as a result of use over a long period of time. This is for the following reason: thermal stress causes the occurrence of cracking or deformation in the single fuel cell and its peripheral components, etc., and a high-temperature region or a low-temperature region may fall outside optimum temperature ranges for the single fuel cell and components.

Also, in the case where cell in-plane temperature is not sufficiently uniformized, a high output voltage has not been obtained in some cases.
The present invention has been conceived in view of the above problem, and an object of the invention is to provide a planar fuel cell apparatus capable of uniformizing the planar temperature of the single fuel cell (i.e., cell in-plane temperature).

### MEANS FOR SOLVING THE PROBLEM

In particular, it is provided a planar fuel cell apparatus having the features defined in claim 1. A further planar fuel cell apparatus is defined in claim 2.

In the following there are described some arrangements. The second arrangement in an embodiment of the present invention. The third to sixth arrangements are helpful for understanding the present invention.
(1) A planar fuel cell apparatus of a first arrangement comprises a single fuel cell having an anode layer, a cathode layer, and a solid electrolyte layer sandwiched therebetween; a fuel gas chamber disposed on an anode layer side; an oxidizer gas chamber disposed on a cathode layer side; one or a plurality of fuel gas inlets through which fuel gas flows into the fuel gas chamber, and one or a plurality of fuel gas outlets through which the fuel gas flows out from the fuel gas chamber; and one or a plurality of oxidizer gas inlets through which oxidizer gas flows into the oxidizer gas chamber, and one or a plurality of oxidizer gas outlets through which the oxidizer gas flows out from the oxidizer gas chamber. The planar fuel cell apparatus is characterized in that, as viewed in a stacking direction, a first rectilinear line which connects a centroid Cfi of the fuel gas inlet(s) and a centroid Cfo of the fuel gas outlet(s), and a second rectilinear line which connects a centroid Cai of the oxidizer gas inlet(s) and a centroid Cao of the oxidizer gas outlet(s) cross each other, and the centroid Cfo of the fuel gas outlet(s) is located closer to the centroid Cai of the oxidizer gas inlet(s) than to the centroid Cao of the oxidizer gas outlet(s).

The planar fuel cell apparatus of the first mode is such that, as viewed in the stacking direction, the first rectilinear line which connects the centroid Cfi of the fuel gas inlet(s) and the centroid Cfo of the fuel gas outlet(s), and the second rectilinear line which connects the centroid Cai of the oxidizer gas inlet(s) and the centroid Cao of the oxidizer gas outlet(s) cross each other. That is, the planar fuel cell apparatus employs so-called cross-flow design in which a fuel gas flow channel and an oxidizer gas flow channel cross each other.

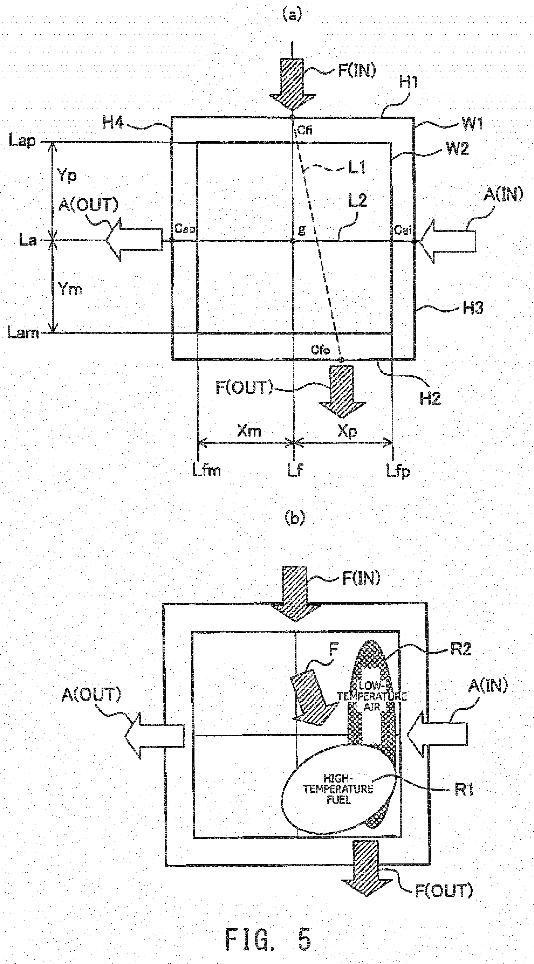

In the planar fuel cell apparatus of cross-flow design, for example, as exemplified in FIG. 5, as viewed in the stacking direction, the centroid Cfo of the fuel gas outlet(s) is disposed closer to the centroid Cai of the oxidizer gas inlet(s) than to the centroid Cao of the oxidizer gas outlet(s).

By virtue of such disposition of the centroid Cfo of the fuel gas outlet(s), as viewed in the stacking direction, a region to which fuel gas having high temperature as a result of reaction (electricity generation) is supplied, and a region to which low-temperature oxidizer gas introduced into the oxidizer gas chamber from outside is supplied become close to each other (e.g., overlap each other); therefore, temperature over the surface of the single fuel cell (in-plane temperature, or cell in-plane temperature) is uniformized.

Thus, there is yielded a marked effect that durability of the fuel cell apparatus is improved without involvement of a great deterioration in electricity generation capability (e.g., output voltage) in contrast to conventional practice. That is, since uniformity of cell in-plane temperature distribution is improved, the fuel cell apparatus can attain compatibility between high electricity generation capability (electricity generation capability of such a high level as not to damage electricity generation capability) and high durability.

Also, according to the first arrangement, since uniformity of temperature distribution can be improved on the single fuel cell basis, the present invention can be applied to not only a fuel cell stack in which a plurality of single fuel cells are stacked but also a single-tier fuel cell apparatus which uses one single fuel cell.

Further, in a fuel cell stack in which the single fuel cells (accordingly, electricity generation units) are stacked, even when thermal conduction is poor between the adjacent single fuel cells (e.g., adjacent upper and lower tiers), high durability can be provided without involvement of the above-mentioned deterioration in electricity generation capability.

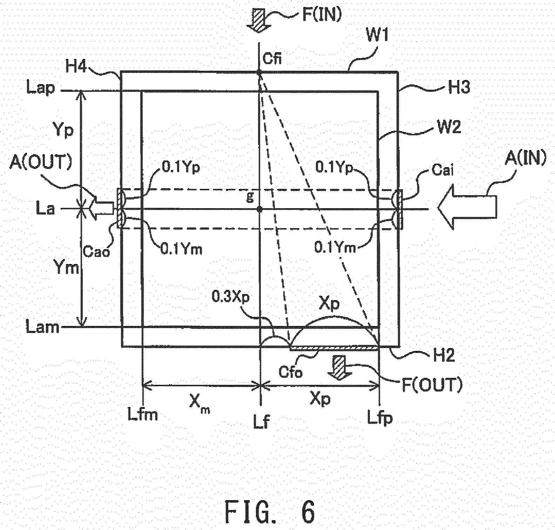

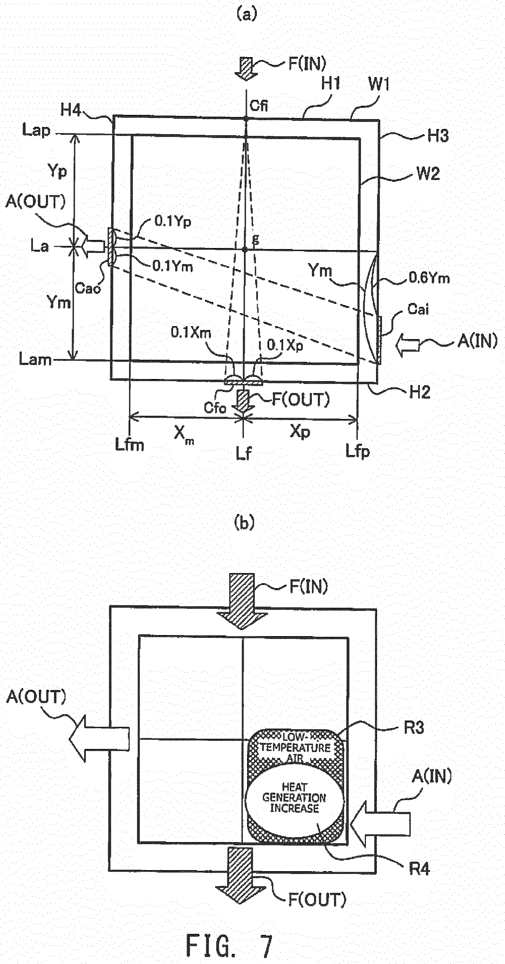

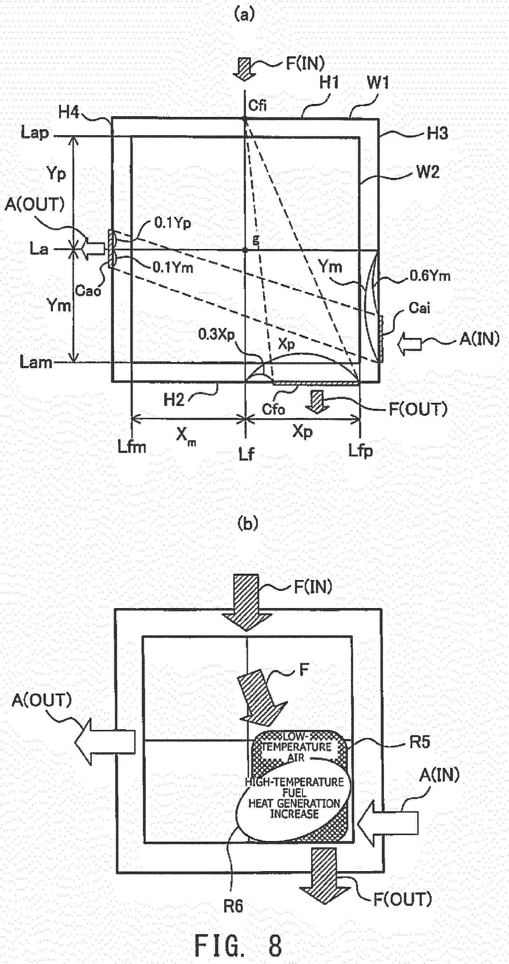

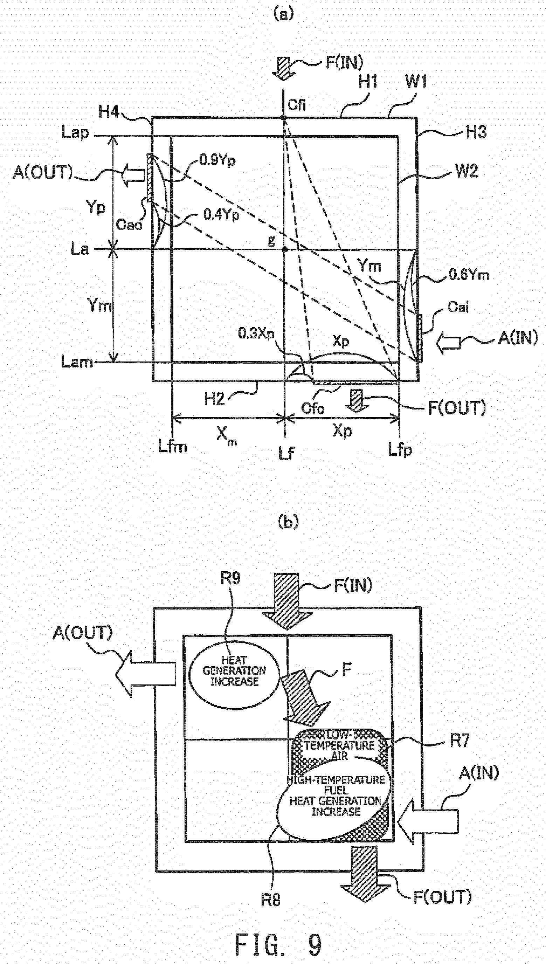

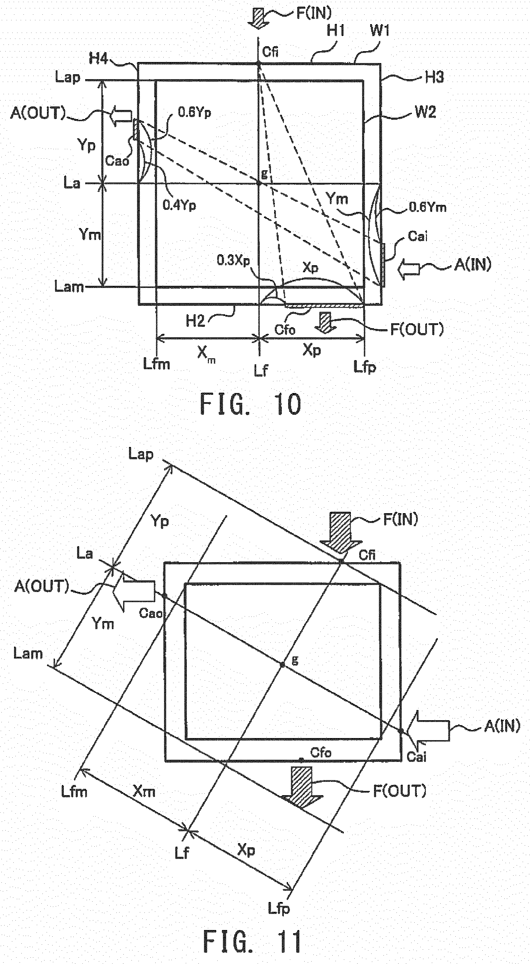

Further, since temperature distribution is directly uniformized within a single tier, a greater effect is yielded than in the case of a method of utilizing thermal conduction between adjacent single fuel cells.
The expression "as viewed in the stacking direction" indicates a view in a direction (stacking direction) in which the anode layer, the solid electrolyte layer, and the cathode layer are laminated together. The term "centroid" indicates the center of gravity on a plane. The centroid of a gas inlet or outlet indicates the center of gravity of an opening of the gas inlet or outlet as viewed in a direction in which the planar fuel cell apparatus extends (a planar direction, or a direction perpendicular to the stacking direction). In the case where a plurality of gas inlets (outlets) exist, the center of gravity is of a set of all the gas inlets (or all the gas outlets) on a plane.
(2) In a planar fuel cell apparatus of a second arrangement, which is an embodiment of the present invention, as viewed in the stacking direction, the centroid Cfo of the fuel gas outlet(s) is disposed at a position offset from a reference line Lf toward a boundary line Lfp by a distance of 0.3Xp to Xp; the centroid Cai of the oxidizer gas inlet(s) is disposed at a position located a distance of 0.1Yp or less from a reference line La toward a boundary line Lap or a distance of 0.1Ym or less from the reference line La toward a boundary line Lam; and the centroid Cao of the oxidizer gas outlet(s) is disposed at a position located a distance of 0.1Yp or less from the reference line La toward the boundary line Lap or a distance of O.IYm or less from the reference line La toward the boundary line Lam.
   Meanings of Lf, La, Lfp, Lfm, Lap, Lam, Xp, Xm, Yp, and Ym are as follows (the same also applies in the following other modes).
   Lf: a rectilinear reference line on the single fuel cell which passes through the centroid Cfi of the fuel gas inlet(s) and through a centroid g of the single fuel cell;
   La: a rectilinear reference line on the single fuel cell which is orthogonal to the reference line Lf and passes through the centroid g;
   Lfp: a rectilinear boundary line which extends on the single fuel cell, is located closer to the centroid Cai of the oxidizer gas inlet(s) than to the reference line Lf, and is in parallel with and most distant from the reference line Lf;
   Lfm: a rectilinear boundary line which extends on the single fuel cell, is located closer to the centroid Cao of the oxidizer gas outlet(s) than to the reference line Lf, and is in parallel with and most distant from the reference line Lf;
   Lap: a rectilinear boundary line which extends on the single fuel cell, is located closer to the centroid Cfi of the fuel gas inlet(s) than to the reference line La, and is in parallel with and most distant from the reference line La;
   Lam: a rectilinear boundary line which extends on the single fuel cell, is located closer to the centroid Cfo of the fuel gas outlet(s) than to the reference line La, and is in parallel with and most distant from the reference line La;
   Xp: the shortest distance between the reference line Lf and the boundary line Lfp;
   Xm: the shortest distance between the reference line Lf and the boundary line Lfm;
   Yp: the shortest distance between the reference line La and the boundary line Lap; and
   Ym: the shortest distance between the reference line La and the boundary line Lam.
   In the second mode, the centroid Cfo of the fuel gas outlet(s), the centroid Cai of the oxidizer gas inlet(s), and the centroid Cao of the oxidizer gas outlet(s) are disposed as mentioned above (see, for example, FIG. 6). Thus, the second mode can yield an effect similar to that of the first mode and can attain compatibility between high electricity generation capability (output voltage) and high durability, as is apparent from experimental examples to be described later.
(3) In a planar fuel cell apparatus of a third arrangement, as viewed in the stacking direction, the centroid Cfo of the fuel gas outlet(s) is disposed at a position located a distance of 0.1Xp or less from the reference line Lf toward the boundary line Lfp or a distance of 0.1Xm or less from the reference line Lf toward the boundary line Lfm; the centroid Cai of the oxidizer gas inlet(s) is disposed at a position offset from the reference line La toward the boundary line Lam by a distance of 0.6Ym to Ym; and the centroid Cao of the oxidizer gas outlet(s) is disposed at a position located a distance of 0.1Yp or less from the reference line La toward the boundary line Lap or a distance of O.IYm or less from the reference line La toward the boundary line Lam.
   In the third arrangement, the centroid Cfo of the fuel gas outlet(s), the centroid Cai of the oxidizer gas inlet(s), and the centroid Cao of the oxidizer gas outlet(s) are disposed as mentioned above (see, for example, FIG. 7). That is, in the third mode, the oxidizer gas inlet(s) is disposed away from a low-temperature region (e.g., an Xp-Yp region at the upper right of FIG. 7) located close to the fuel gas inlet(s) and the oxidizer gas inlet(s), whereby the low-temperature region increases in temperature. Also, since oxygen concentration increases in a region to which the oxidizer gas inlet(s) is brought close (e.g., an Xp-Ym region at the lower right of FIG. 7), the amount of heat generated by reaction (electricity generation) increases in the region as a result of an increase in oxygen concentration.
   By virtue of such feature, uniformity of cell in-plane temperature distribution is improved. Thus, the third mode can yield an effect similar to that of the first mode and can attain compatibility between high electricity generation capability (output voltage) and high durability, as is apparent from experimental examples to be described later.
(4) In a planar fuel cell apparatus of a fourth arrangement, as viewed in the stacking direction, the centroid Cfo of the fuel gas outlet(s) is disposed at a position offset from the reference line Lf toward the boundary line Lfp by a distance of 0.3Xp to Xp; the centroid Cai of the oxidizer gas inlet(s) is disposed at a position offset from the reference line La toward the boundary line Lam by a distance of 0.6Ym to Ym; and the centroid Cao of the oxidizer gas outlet(s) is disposed at a position located a distance of 0.1Yp or less from the reference line La toward the boundary line Lap or a distance of O.IYm or less from the reference line La toward the boundary line Lam.
   In the fourth arrangement, the centroid Cfo of the fuel gas outlet(s), the centroid Cai of the oxidizer gas inlet(s), and the centroid Cao of the oxidizer gas outlet(s) are disposed as mentioned above (see, for example, FIG. 8). Since this yields a synergetic effect of the above-mentioned disposition of the fuel gas outlet(s) of the second mode and the above-mentioned disposition of the oxidizer gas inlet(s) of the third mode, uniformity of cell in-plane temperature distribution is more improved. Thus, the fourth mode can yield an effect similar to that of the first mode and can attain compatibility between high electricity generation capability (output voltage) and high durability, as is apparent from experimental examples to be described later.
(5) In a planar fuel cell apparatus of a fifth arrangement, as viewed in the stacking direction, the centroid Cfo of the fuel gas outlet(s) is disposed at a position offset from the reference line Lf toward the boundary line Lfp by a distance of 0.3Xp to Xp; the centroid Cai of the oxidizer gas inlet(s) is disposed at a position offset from the reference line La toward the boundary line Lam by a distance of 0.6Ym to Ym; and the centroid Cao of the oxidizer gas outlet(s) is disposed at a position offset from the reference line La toward the boundary line Lap by a distance of 0.4Yp to 0.9Yp.
   In the fifth arrangement, the centroid Cfo of the fuel gas outlet(s), the centroid Cai of the oxidizer gas inlet(s), and the centroid Cao of the oxidizer gas outlet(s) are disposed as mentioned above (see, for example, FIG. 9).
   In the fifth arrangement, since the oxidizer gas outlet(s) is disposed close to the fuel gas inlet(s), in a region where an oxidizer gas inlet(s) is disposed (e.g., an Xp-Ym region at the lower right of FIG. 9), the amount of heat generated by reaction (electricity generation) increases as a result of an increase in oxygen concentration.
   By virtue of such feature, uniformity of cell in-plane temperature distribution is more improved. Thus, the fifth mode can yield an effect similar to that of the first mode and can attain compatibility between high electricity generation capability (output voltage) and high durability, as is apparent from experimental examples to be described later.
(6) In a planar fuel cell apparatus of a sixth arrangement, as viewed in the stacking direction, the centroid Cao of the oxidizer gas outlet(s) is disposed at a position offset from the reference line La toward the boundary line Lap by a distance of 0.4Yp to 0.6Yp.
   In the sixth arrangement, the centroid Cao of the oxidizer gas outlet(s) is disposed as mentioned above (see, for example, FIG. 10). Thus, the sixth mode can yield a more marked effect than does the fifth mode, as is apparent from experimental examples to be described later. Specifically, the sixth mode uniformizes cell in-plane temperature to a higher extent and thus can attain compatibility between higher electricity generation capability (output voltage) and higher durability.
(7) A planar fuel cell apparatus of a seventh arrangement, which is as long as the fuel cell of the second arrangement is concerned, an embodiment of the present invention, comprises a plurality of stacked planar fuel cell units each comprising a single fuel cell having an anode layer, a cathode layer, and a solid electrolyte layer sandwiched therebetween; a fuel gas chamber disposed on an anode layer side; an oxidizer gas chamber disposed on a cathode layer side; one or a plurality of fuel gas inlets through which fuel gas flows into the fuel gas chamber, and one or a plurality of fuel gas outlets through which the fuel gas flows out from the fuel gas chamber; and one or a plurality of oxidizer gas inlets through which oxidizer gas flows into the oxidizer gas chamber, and one or a plurality of oxidizer gas outlets through which the oxidizer gas flows out from the oxidizer gas chamber. At least any one of the planar fuel cell units is the planar fuel cell apparatus according to any one of the first to sixth modes.

The planar fuel cell apparatus of the seventh arrangement is a planar fuel cell apparatus (e.g., a fuel cell stack) in which a plurality of planar fuel cell units (e.g., electricity generation units) are stacked, and includes any one of the planar fuel cell apparatus of the first to sixth modes; therefore, the planar fuel cell apparatus of the seventh mode can provide high output voltage.

In the case where the planar shape (a shape viewed from the stacking direction) of the fuel cell apparatus is quadrangular, the following configuration can be employed.
A planar fuel cell apparatus comprises a single fuel cell having a planar quadrangular shape and having a first main surface and a second main surface to which sides fuel gas and oxidizer gas are supplied respectively; a fuel gas chamber disposed on a first main surface side; an oxidizer gas chamber disposed on a second main surface side; in plan view (as viewed in a direction perpendicular to the main surfaces), one or a plurality of fuel gas inlets disposed at a position(s) corresponding to one of two mutually facing first sides (e.g., first side H1 and second side H2 in FIG. 5) of the single fuel cell and through which the fuel gas flows into the fuel gas chamber, and one or a plurality of fuel gas outlets disposed at a position(s) corresponding to the other first side and through which the fuel gas flows out from the fuel gas chamber; and one or a plurality of oxidizer gas inlet disposed at a position corresponding to one of two mutually facing second sides (e.g., third side H3 and fourth side H4 in FIG. 5) different from the first sides of the single fuel cell and through which the oxidizer gas flows into the oxidizer gas chamber, and one or a plurality of oxidizer gas outlet disposed at a position corresponding to the other second side and through which the oxidizer gas flows out from the oxidizer gas chamber. The planar fuel cell apparatus is characterized in that the centroid Cfo of the fuel gas outlet(s) is located closer to the centroid Cai of the oxidizer gas inlet than to the centroid Cao of the oxidizer gas outlet.

### BRIEF DESCRIPTION OF THE DRAWINGS

[FIG. 1] Perspective view of a fuel cell stack of an arrangement.
[FIG. 2(a)] Sectional view of an electricity generation unit taken along the stacking direction.
[FIG. 2(b)] Explanatory view showing flow channels of fuel gas and oxidizer gas in the electricity generation unit.
[FIG. 3] Exploded perspective view showing the electricity generation unit.
[FIG. 4] Views showing inner peripheral surfaces of frames of a single fuel cell as viewed from the center of the single fuel cell, wherein (a) is an explanatory view showing the first surface of an anode insulating frame, (b) is an explanatory view showing the second surface of the anode insulating frame, (c) is an explanatory view showing the third surface of a cathode insulating frame, and (d) is an explanatory view showing the fourth surface of the cathode insulating frame.
[FIG. 5(a)] Explanatory view showing flow channels in an electricity generation unit of a first arrangement as viewed in a stacking direction.
[FIG. 5(b)] Explanatory view showing conditions, such as temperature, of gases in regions of the electricity generation unit.
[FIG. 6] Explanatory view showing flow channels in an electricity generation unit of a second arrangement as viewed in the stacking direction. The second arrangement is an arrangement in accordance with the present invention.
[FIG. 7(a)] Explanatory view showing flow channels in an electricity generation unit of a third arrangement as viewed in the stacking direction.
[FIG. 7(b)] Explanatory view showing conditions, such as temperature, of gases in regions of the electricity generation unit.
[FIG. 8(a)] Explanatory view showing flow channels in an electricity generation unit of a fourth arrangement as viewed in the stacking direction.
[FIG. 8(b)] Explanatory view showing conditions, such as temperature, of gases in regions of the electricity generation unit.
[FIG. 9(a)] Explanatory view showing flow channels in an electricity generation unit of a fifth arrangement as viewed in the stacking direction.
[FIG. 9(b)] Explanatory view showing conditions, such as temperature, of gases in regions of the electricity generation unit.
[FIG. 10] Explanatory view showing flow channels in an electricity generation unit of a sixth arrangement as viewed in the stacking direction.
[FIG. 11] Explanatory view showing flow channels in an electricity generation unit of a seventh arrangement as viewed in the stacking direction.
[FIG. 12] Explanatory view showing flow channels in an electricity generation unit of a reference model as viewed in the stacking direction.
[FIG. 13] Graph showing the relation between the positions of flow channels and a change of output voltage obtained from the results of experimental example 2.
[FIG. 14] Graph relating to the conventional technique and showing the relation between planar temperature distribution and gas flow channels in a single fuel cell. The third to sixth arrangements are arrangements that are helpful for understanding the present invention. In particular, the second arrangements is an embodiment according to the present invention.

### MODES FOR CARRYING OUT THE INVENTION

A planar fuel cell apparatus to which the present invention is applied will next be described while referring to a solid oxide fuel cell apparatus.

### [First embodiment]

### a) First, the schematic structure of a planar fuel cell apparatus of the first embodiment will be described.

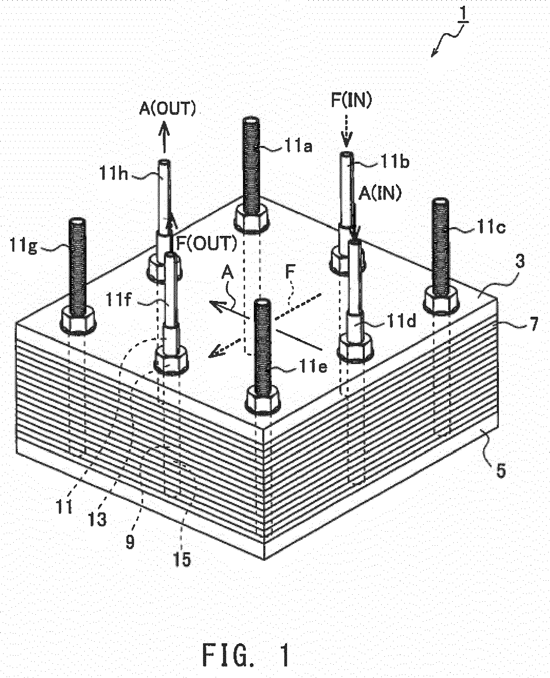

As shown in FIG. 1, a planar fuel cell apparatus (hereinafter, may be referred to merely as "fuel cell apparatus") 1 of the first arrangement generates electricity by use of fuel gas (e.g., hydrogen) and oxidizer gas (e.g., air, more specifically oxygen contained in air) supplied thereto.

In the drawings, oxidizer gas is denoted by "A," and fuel gas is denoted by "F." Also, "IN" indicates that gas is introduced, and "OUT" indicates that gas is discharged. Further, for convenience of description, directions such as "upper" and "lower" are mentioned on the basis of directions in the drawings, but are not intended to specify the directivity of an actual fuel cell apparatus.

The fuel cell apparatus 1 of the first arrangement is a planar (rectangular parallelepiped) solid oxide fuel cell apparatus and is a fuel cell stack configured such that a plurality of (e.g., 20) tiered (planar) electricity generation units 7 are disposed between end plates 3 and 5 disposed at vertically opposite ends in FIG. 1.

The end plates 3 and 5 and the electricity generation units 7 have a plurality of (e.g., eight) bolt insertion holes 9 extending therethrough in a stacking direction (vertical direction in FIG. 1). Two of the bolt insertion holes 9 are used as gas flow channels for oxidizer gas, and other two of the bolt insertion holes 9 are used as gas flow channels for fuel gas.

The end plates 3 and 5 and the electricity generation units 7 are unitarily fixed by bolts 11a, 11b, 11c, 11d, 11e, 11f, 11g, and 11h (collectively referred to as bolts 11) disposed in the bolt insertion holes 9 and nuts 13 threadingly engaged with the respective bolts 11.

Of the bolts 11, the particular (four) bolts 11b, 1 1d, 11f, and 11h have an inner flow channel 15 formed therein along the axial direction (the vertical direction in FIG. 1) and through which oxidizer gas or fuel gas flows. The bolt 11b is used for introduction of fuel gas; the bolt 11d is used for introduction of oxidizer gas; the bolt 11f is used for discharge of fuel gas; and the bolt 11h is used for discharge of oxidizer gas.

### b) Next, the structure of the electricity generation unit 7 will be described in detail.

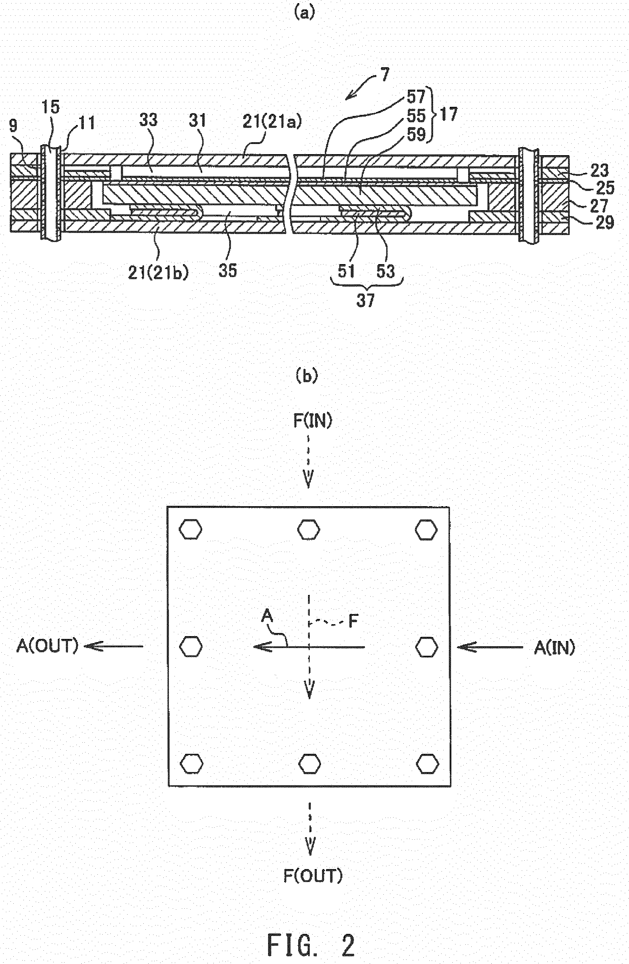

As shown in FIG. 2, the electricity generation unit 7 is configured such that components required for generation of electricity such as a single fuel cell (hereinafter, may be referred to merely as a "single cell") 17 to be described later are disposed between two interconnectors 21a and 21b (collectively referred as interconnectors 21) disposed at opposite sides with respect to the stacking direction (the vertical direction in FIG. 2(a)).

More specifically, the electricity generation unit 7 is configured such that the metal interconnector 21a, a cathode insulating frame 23, a metal separator 25, a metal anode frame 27, an anode insulating frame 29, the metal interconnector 21b, etc., are stacked. The stacked members 21, 23, 24, 27, and 29 have the bolt insertion holes 9 formed therein and allowing insertion of the respective bolts 11.

The single cell 17 is joined to the separator 25; a cathode current collector 33 is disposed in a flow channel (a flow channel in which oxidizer gas flows; i.e., an oxidizer gas chamber) 31 within the cathode insulating frame 23; and an anode current collector 37 is disposed in a flow channel (a flow channel in which fuel gas flows; i.e., fuel gas chamber) 35 within the anode frame 27 and the anode insulating frame 29.

The components will next be described in detail.

### <Interconnector 21>

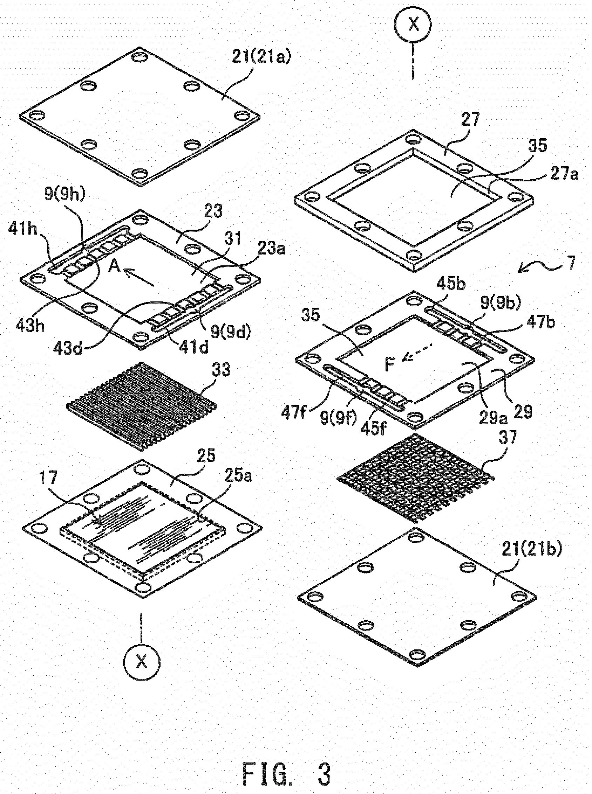

As shown in FIG. 3, the interconnector 21 is formed of an electrically conductive plate (e.g., a plate of stainless steel such as SUS430). The interconnector 21 secures electrical conduction between the single cells 17 and prevents the mixing of gases between the single cells 17 (accordingly, between the electricity generation units 7).

A single interconnector 21 suffices for disposition between the adjacent electricity generation units 7. Also, the interconnectors 21 at the upper and lower ends of the fuel cell apparatus 1 are used as the end plates 3 and 5 (see FIG. 1).

### <Cathode insulating frame 23>

The cathode insulating frame 23 is an electrically insulative frame plate having a quadrangular (rectangular) shape as viewed in the stacking direction (as viewed in the vertical direction in FIG. 2(a)). For example, a mica frame formed of soft mica is used as the cathode insulating frame 23. The cathode insulating frame 23 has a rectangular opening portion 23a formed at a central portion as viewed in the stacking direction and partially constituting the oxidizer gas chamber 31.

The cathode insulating frame 23 has two hole portions 41d and 41h, or a pair of elongated holes, formed at mutually facing frame portions (portions corresponding to opposite sides of a rectangle) and serving as oxidizer gas flow channels. As will be described in detail later, one hole portion 41d is accompanied by a plurality of (e.g., six) grooves (grooves for oxidizer gas inlets Ain) 43d, which are flow channels communicating with the opening portion 23a, and the other hole portion 41h is accompanied by a plurality of (e.g., six) grooves (grooves for oxidizer gas outlets Aout) 43h, which are flow channels communicating with the opening portion 23a.

### <Cathode current collector 33>

The cathode current collector 33 is an elongated electrically conductive member (e.g., a column member of stainless steel such as SUS430). A plurality of the cathode current collectors 33 are disposed in the opening portion 23a of the cathode insulating frame 23 along the direction of disposition of a pair of the bolt insertion holes 9 (9d, 9h); i.e., along a flow channel of oxidizer gas. The cathode current collectors 33 may be embodied in the form of latticed rectangular parallelepiped protrusions formed on the interconnector 21 on a side toward the oxidizer gas chamber 31.

### <Separator 25>

The separator 25 is an electrically conductive frame plate (e.g., a plate of stainless steel such as SUS430) having a quadrangular (rectangular) shape as viewed in the stacking direction. The separator 25 has a rectangular opening portion 25a formed at a central portion as viewed in the stacking direction. An outer peripheral portion (its upper surface side) of the single cell 17 is joined by brazing to an edge portion (its lower surface side) of the separator 25 extending along the opening portion 25a. That is, the single cell 17 is joined in such a manner as to close the opening portion 25a of the separator 25.

### <Anode frame 27>

The anode frame 27 is an electrically conductive frame plate (e.g., a plate of stainless steel such as SUS430) having a quadrangular (rectangular) shape as viewed in the stacking direction. The anode frame 27 has a rectangular opening portion 27a formed at a central portion as viewed in the stacking direction and partially constituting the fuel gas chamber 35.

### <Anode insulating frame 29>

Similar to the cathode insulating frame 23, the anode insulating frame 29 is an electrically insulative frame plate having a quadrangular (rectangular) shape as viewed in the stacking direction and is a mica frame formed of soft mica. The anode insulating frame 29 has a rectangular opening portion 29a formed at a central portion as viewed in the stacking direction and partially constituting the fuel gas chamber 35.

The anode insulating frame 29 has two hole portions 45b and 45f, or a pair of elongated holes, formed at mutually facing frame portions (portions corresponding to opposite sides of a rectangle) and serving as fuel gas flow channels. As will be described in detail later, one hole portion 45b is accompanied by a plurality of (e.g., four) grooves (grooves for fuel gas inlets Fin) 47b, which are flow channels communicating with the opening portion 29a, and the other hole portion 45f is accompanied by a plurality of (e.g., four) grooves (grooves for fuel gas outlets Fout) 47f, which are flow channels communicating with the opening portion 29a.

### <Anode current collector 37>

As shown in FIG. 2(a), the anode current collector 37 is a publicly known latticed member (see, for example, a current collector 19 described in Japanese Patent Application Laid-Open (*kokai*) No. 2013-55042) in which an elastic (cushioning) spacer 51, which is a core member of mica, and an electrically conductive plate of metal (e.g., a mesh or foil of nickel having a flat plate shape) 53 are combined.

### <Single fuel cell 17>

The single cell 17 is a so-called anode support type and is configured such that a cathode layer 57 and an anode layer 59 are laminated together with a solid electrolyte layer 55 sandwiched therebetween. The single cell 17 has a quadrangular (rectangular) shape as viewed in the stacking direction and is supplied with fuel gas on its first main surface side (on the anode layer 59 side) and with oxidizer gas on its second main surface side (on the cathode layer 57 side).

Materials used to form the solid electrolyte layer 55 include, for example, zirconia-based, ceria-based, and perovskite-type electrolyte materials. Zirconia-based materials include yttria-stabilized zirconia (YSZ), scandia-stabilized zirconia (ScSZ), and calcia-stabilized zirconia (CaSZ). Generally, yttria-stabilized zirconia (YSZ) is used in many cases. A ceria-based material to be used is so-called rare earth element-added ceria. A perovskite-type material to be used is a lanthanum element-containing perovskite-type compound oxide.

Materials used to form the cathode layer 57 include perovskite-type oxides, noble metals, and cermets of noble metals and ceramic.
Materials used to form the anode layer 59 include, for example, mixtures of metals such as Ni and Fe and ceramics such as ZrO₂ ceramics, such as zirconia stabilized by at least one of rare earth elements such as Sc and Y, and CeO ceramics. Also, metals such as Ni, cermets of Ni and the ceramics, and Ni-based alloys can be used.

### c) Next, fuel gas and oxidizer gas flow channels, which are essential members of the first arrangement, will be described in detail.

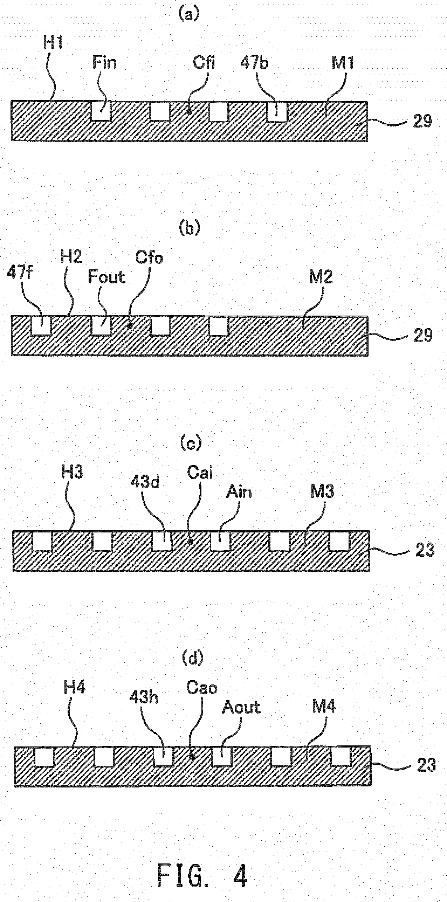

As shown in FIGS. 4(a) and 4(b), the fuel cell apparatus 1 of the first arrangement has a plurality of (e.g., four) fuel gas inlets Fin, or openings of the grooves 47b located toward the opening portion 29a, through which fuel gas flows into the fuel gas chamber 35, and a plurality of (e.g., four) fuel gas outlets Fout, or openings of the grooves 47f located toward the opening portion 29a, through which fuel gas flows out from the fuel gas chamber 35.

Meanwhile, as shown in FIGS. 4(c) and 4(d), the fuel cell apparatus 1 has a plurality of (e.g., six) oxidizer gas inlets Ain, or openings of the grooves 43d located toward the opening portion 23a, through which oxidizer gas flows into the oxidizer gas chamber 31, and a plurality of (e.g., six) oxidizer gas outlets Aout, or openings of the grooves 43h located toward the opening portion 23a, through which oxidizer gas flows out from the oxidizer gas chamber 31.

FIG. 4 is a set of views of the flow inlets Fin and Ain and of the flow outlets Fout and Aout as viewed from the opening portion 29a. The number of flow inlets Fin or Ain and the number of flow outlets Fout or Aout may be one or more than one.

As shown in FIG. 5(a), in the fuel cell apparatus 1, as viewed in the stacking direction, a first straight line L1 which connects a centroid Cfi of the fuel gas inlets Fin and a centroid Cfo of the fuel gas outlets Fout, and a second straight line L2 which connects a centroid Cai of the oxidizer gas inlets Ain and a centroid Cao of the oxidizer gas outlets Aout cross each other. That is, the fuel cell apparatus 1 is of cross-flow design in which the flow channel of fuel gas and the flow channel of oxidizer gas cross each other (see FIG. 2(b)).

Further, as viewed in the stacking direction, the centroid Cfo of the fuel gas outlets Fout is located closer to the centroid Cai of the oxidizer gas inlets Ain than to the centroid Cao of the oxidizer gas outlets Aout. This condition is hereinafter called "flow channel disposition condition 1."

In FIG. 5, a rectangular first frame W1 defined by the outer lines indicates the inner peripheries (positions of inner peripheral surfaces) of the cathode insulating frame 23 and the anode insulating frame 29; a rectangular second frame W2 defined by the inner lines indicates the outer periphery of the single cell 17; and g indicates the centroid of the single cell 17. In FIG. 5, symbols Lf, La, Lfp, Lfm, Lap, Lam, Xp, Xm, Yp, and Ym have the above-mentioned meanings, respectively. The meanings of the symbols also apply to the following other arrangements.

The centroid will next be described with reference to FIGS. 4 and 5.
The centroid is the center of gravity of a plane figure of the flow inlet Fin or Ain or the flow outlet Fout or Aout as viewed in a direction perpendicular to the stacking direction (the vertical direction in FIG. 4) (as viewed along, for example, a planar direction along which the cathode layer 57 extends). In the case where a plurality of the flow inlets Fin or Ain or a plurality of the flow outlets Fout or Aout exist, the centroid is the center of gravity with respect to the plane figures of all the flow inlets Fin or Ain or all the flow outlets Fout or Aout (i.e., a set of the plane figures).

Specifically, when, of the inner peripheral surfaces of the anode insulating frame 29, an inner peripheral surface on the side where the fuel gas inlet Fin is provided is viewed in a direction perpendicular to the inner peripheral surface, as shown in FIG. 4(a), the inner peripheral surface (a first surface M1 in a strip shape) has four fuel gas inlets Fin. Therefore, the center of gravity of a set of the plane figures of the four fuel gas inlets Fin is used as the centroid Cfi.

Here, for example, the centroid Cfi of a set of the fuel gas inlets Fin is disposed at the horizontal center of the first surface M1. Accordingly, as viewed in the stacking direction, the centroid Cfi of a set of the fuel gas inlets Fin is located at the midpoint of a first side H1 of the first frame W1 (see FIG. 5(a)).

Similarly, when, of the inner peripheral surfaces of the anode insulating frame 29, an inner peripheral surface on the side where the fuel gas outlet Fout is provided is viewed in a direction perpendicular to the inner peripheral surface, as shown in FIG. 4(b), the inner peripheral surface (a second surface M2 located opposite the first surface M1 and having a strip shape) has four fuel gas outlets Fout. Therefore, the center of gravity of a set of the plane figures of the four fuel gas outlets Fout is used as the centroid Cfo.

Here, for example, since the fuel gas outlets Fout are disposed leftward in FIG. 4(b), the centroid Cfo of a set of the fuel gas outlets Fout is offset leftward from the horizontal center of the second surface M2. Accordingly, as viewed in the stacking direction, the centroid Cfo of a set of the fuel gas outlets Fout is offset toward a third side H3 from the midpoint of a second side H2 of the first frame W1; in other words, toward the centroid Cai of the oxidizer gas inlets Ain (see FIG. 5(a)).

Meanwhile, when, of the inner peripheral surfaces of the cathode insulating frame 23, an inner peripheral surface on the side where the oxidizer gas inlet Ain is provided is viewed in a direction perpendicular to the inner peripheral surface, as shown in FIG. 4(c), the inner peripheral surface (a third surface M3 in a strip shape) has six oxidizer gas inlets Ain. Therefore, the center of gravity of a set of the plane figures of the six oxidizer gas inlets Ain is used as the centroid Cai.

Here, for example, the centroid Cai of a set of the oxidizer gas inlets Ain is the horizontal center of the third surface M3. Accordingly, as viewed in the stacking direction, the centroid Cai of a set of the oxidizer gas inlets Ain is located at the midpoint of a third side H3 of the first frame W1 (see FIG. 5(a)).

Similarly, when, of the inner peripheral surfaces of the cathode insulating frame 23, an inner peripheral surface on the side where the oxidizer gas outlet Aout is provided is viewed in a direction perpendicular to the inner peripheral surface, as shown in FIG. 4(d), the inner peripheral surface (a fourth surface M4 located opposite the third surface M3 and having a strip shape) has six oxidizer gas outlets Aout. Therefore, the center of gravity of a set of the plane figures of the six oxidizer gas outlets Aout is used as the centroid Cao.

Here, for example, the centroid Cao of a set of the oxidizer gas outlets Aout is located at the horizontal center of the fourth surface M4. Accordingly, as viewed in the stacking direction, the centroid Cao of a set of the oxidizer gas outlets Aout is located at the midpoint of a fourth side H4 of the first frame W1 (see FIG. 5(a)).

Notably, the positions of the flow inlets Fin and Ain and the flow outlets Fout and Aout shown in FIGS. 4 and 5 are of a preferred example. No particular limitation is imposed thereon so long as the above-mentioned "flow channel disposition condition 1" (in cross-flow design) is met.

### d) Next, a method of manufacturing the fuel cell apparatus 1 will be described briefly.

### [Manufacturing process for members]

First, the interconnectors 21, the anode frames 27, the separators 25, and the end plates 3 and 5 were punched out from plate materials of, for example, SUS430.

The cathode insulating frames 23 and the anode insulating frames 29 shown in FIG. 3 were manufactured from a well-known mica sheet of soft mica by punching and grooving.

### [Manufacturing process for single fuel cell 17]

The single cells 17 were manufactured according to the usual method.

Specifically, first, in order to form the anode layers 59, anode paste was prepared by use of, for example, 40 to 70 parts by mass yttria-stabilized zirconia (YSZ) powder, 40 to 70 parts by mass nickel oxide powder, and binder solution. By use of the anode paste, an anode green sheet was manufactured.

In order to manufacture the solid electrolyte layers 55, solid electrolyte paste was prepared by use of, for example, YSZ powder and binder solution. By use of the solid electrolyte paste, a solid electrolyte green sheet was manufactured.

Next, the solid electrolyte green sheet was laminated on the anode green sheet. The resultant laminate was heated at 1,200°C-1, 500°C for 1-10 hours, thereby yielding a sintered laminate.

In order to form the cathode layers 57, cathode paste was prepared by use of, for example, La₁₋ₓSrₓCO_{1-y}Fe_{y}O₃ powder and binder solution.
Next, the cathode paste was applied by printing to the surface of the solid electrolyte layer 55 of the sintered laminate. Then, the printed cathode paste was fired in such a manner as to avoid becoming dense; specifically, at 900°C-1,200°C for 1-5 hours, thereby forming the cathode layers 57.

Thus, the single cells 17 were completed. The separators 25 were fixed by brazing to the single cells 17, respectively.

### [Manufacturing process for fuel cell apparatus 1]

Next, the above-mentioned members were stacked in a desired number of tiers as shown in FIG. 1, and the end plates 3 and 5 were placed at opposite ends with respect to the stacking direction, thereby yielding a stacked body.

The bolts 11 were inserted through the respective bolt insertion holes 9 of the stacked body. The nuts 13 were screwed to the bolts 11 and tightened, thereby unitarily fixing the stacked body through tightening.
Thus, the fuel cell apparatus 1 of the first arrangement was completed.

### e) Next, the effect of the first arrangement will be described.

The fuel cell apparatus 1 of the first arrangement employs so-called cross-flow design in which a fuel gas flow channel and an oxidizer gas flow channel cross each other. In the fuel cell apparatus 1 of cross-flow design, as viewed in the stacking direction, the centroid Cfo of the fuel gas outlets Fout is disposed closer to the centroid Cai of the oxidizer gas inlets Ain than to the centroid Cao of the oxidizer gas outlets Aout. That is, the fuel gas flow channel and the oxidizer gas flow channel are disposed in such a manner as to meet the above-mentioned "flow channel disposition condition 1."

By virtue of such disposition of the centroid Cfo of the fuel gas outlets Fout, as shown in FIG. 5(b), as viewed in the stacking direction, a region (high-temperature fuel region R1) to which fuel gas having high temperature as a result of reaction (electricity generation) is supplied, and a region (low-temperature air region R2) to which low-temperature oxidizer gas introduced into the electricity generation unit 7 from outside is supplied become close to each other as a result of overlapping disposition or the like; therefore, in-plane temperature (cell in-plane temperature) in the single cell 17 is uniformized.

Thus, there is yielded the following marked effect: as a result of noninvolvement of a great deterioration in output voltage, high output voltage can be secured, and durability of the fuel cell apparatus 1 is improved. That is, since uniformity of temperature distribution can be improved, the fuel cell apparatus 1 can attain compatibility between high output voltage and high durability.

Also, according to the first arrangement, since uniformity of temperature distribution can be improved on the single fuel cell 17 basis, the present invention can be applied to not only a fuel cell stack in which a plurality of the single fuel cells 17 (accordingly, the electricity generation units 7) are stacked but also a single-tier fuel cell apparatus 1 which uses one single fuel cell 17.

Further, in the fuel cell apparatus 1 in which the single fuel cells 17 are stacked (i.e., a fuel cell stack), even when thermal conduction is poor between the adjacent single fuel cells 17 (i.e., the adjacent upper and lower electricity generation units 7), the above-mentioned compatibility between high output voltage and high durability can be attained.

Further, since temperature distribution is directly uniformized within a single tier, a greater effect is yielded than in the case of a method of utilizing thermal conduction between the adjacent single cells 17.

### [Second arrangement]

Next, a second arrangement will be described; however, the description of contents similar to those of the first arrangement is omitted. In the following description, structural members similar to those of the first arrangement are denoted by the same reference numerals as those of the first arrangement.

The fuel cell apparatus 1 of the second arrangement meets the following "flow channel disposition condition 2" as well as "flow channel disposition condition 1" of the first arrangement with respect to the oxidizer gas flow channel and the fuel gas flow channel.

Specifically, in the fuel cell apparatus 1 of the second arrangement, as shown in FIG. 6, as viewed in the stacking direction, the centroid Cfo of the fuel gas outlets Fout is disposed at a position offset from the reference line Lf toward the boundary line Lfp by a distance of 0.3Xp to Xp; the centroid Cai of the oxidizer gas inlets Ain is disposed at a position located a distance of 0.1Yp or less from the reference line La toward the boundary line Lap or a distance of O.IYm or less from the reference line La toward the boundary line Lam; and the centroid Cao of the oxidizer gas outlets Aout is disposed at a position located a distance of 0.1Yp or less from the reference line La toward the boundary line Lap or a distance of O.IYm or less from the reference line La toward the boundary line Lam (flow channel disposition condition 2).

In the first frame W1 of FIG. 6, the centroid Cfi of the fuel gas inlets Fin is disposed on the first side H1 (e.g., at the midpoint of the first side H1). A hatched strip on the second side H2 indicates a range of disposition of the centroid Cfo of the fuel gas outlets Fout; a hatched strip on the third side H3 indicates a range of disposition of the centroid Cai of the oxidizer gas inlets Ain; and a hatched strip on the fourth side H4 indicates a range of disposition of the centroid Cao of the oxidizer gas outlets Aout.

By virtue of such a configuration, the second arrangement yields an effect similar to that of the first arrangement. As shown in experimental example 1 to be described later, since the second arrangement meets "flow channel disposition condition 2" to thereby improve uniformity of temperature distribution, the second arrangement can attain compatibility between high electricity generation capability and high durability.

### [Third arrangement]

Next, a third arrangement will be described; however, the description of contents similar to those of the first arrangement is omitted. In the following description, structural members similar to those of the first arrangement are denoted by the same reference numerals as those of the first arrangement.

The fuel cell apparatus 1 of the third arrangement meets the following "flow channel disposition condition 3" as well as "flow channel disposition condition 1" of the first arrangement with respect to the oxidizer gas flow channel and the fuel gas flow channel.

Specifically, in the fuel cell apparatus 1 of the third arrangement, as shown in FIG. 7(a), as viewed in the stacking direction, the centroid Cfo of the fuel gas outlets Fout is disposed at a position located a distance of 0.1Xp or less from the reference line Lf toward the boundary line Lfp or a distance of 0.1Xm or less from the reference line Lf toward the boundary line Lfm; the centroid Cai of the oxidizer gas inlets Ain is disposed at a position offset from the reference line La toward the boundary line Lam by a distance of 0.6Ym to Ym; and the centroid Cao of the oxidizer gas outlets Aout is disposed at a position located a distance of 0.1Yp or less from the reference line La toward the boundary line Lap or a distance of O.IYm or less from the reference line La toward the boundary line Lam (flow channel disposition condition 3).

In the first frame W1 of FIG. 7(a), the centroid Cfi of the fuel gas inlets Fin is disposed on the first side H1 (e.g., at the midpoint of the first side H1). The hatched strips on the first frame W1 have the same meanings as those of the second arrangement.

By virtue of such a configuration, the third arrangement yields an effect similar to that of the first arrangement. Also, as shown in FIG. 7(b), by means of "flow channel disposition condition 3" being met, region R3 into which low-temperature oxidizer gas (i.e., low-temperature air) is introduced from outside, and region R4 in which the generation of heat increases as a result of a high-oxygen-concentration region and the fuel gas flow channel coming into close proximity to each other overlap each other.

Specifically, the oxidizer gas inlets Ain are disposed away from a low-temperature region (e.g., an Xp-Yp region at the upper right of FIG. 7(a)) located close to the fuel gas inlets Fin and the oxidizer gas inlets Ain, whereby the low-temperature region increases in temperature. Also, since oxygen concentration increases in a region to which the oxidizer gas inlets Ain are brought close (e.g., an Xp-Ym region at the lower right of FIG. 7(a)), the amount of heat generated by reaction (electricity generation) increases in the region as a result of an increase in oxygen concentration.

By virtue of such feature, uniformity of cell in-plane temperature distribution is improved. Thus, as is apparent from experimental example 1 to be described later, the third arrangement can attain compatibility between high electricity generation capability (output voltage) and high durability.

### [Fourth arrangement]

Next, a fourth arrangement will be described; however, the description of contents similar to those of the first arrangement is omitted. In the following description, structural members similar to those of the first arrangement are denoted by the same reference numerals as those of the first arrangement.

The fuel cell apparatus 1 of the fourth arrangement meets the following "flow channel disposition condition 4" as well as "flow channel disposition condition 1" of the first arrangement with respect to the oxidizer gas flow channel and the fuel gas flow channel.

Specifically, in the fuel cell apparatus 1 of the fourth arrangement, as shown in FIG. 8(a), as viewed in the stacking direction, the centroid Cfo of the fuel gas outlets Fout is disposed at a position offset from the reference line Lf toward the boundary line Lfp by a distance of 0.3Xp to Xp; the centroid Cai of the oxidizer gas inlets Ain is disposed at a position offset from the reference line La toward the boundary line Lam by a distance of 0.6Ym to Ym; and the centroid Cao of the oxidizer gas outlets Aout is disposed at a position located a distance of 0.1Yp or less from the reference line La toward the boundary line Lap or a distance of O.IYm or less from the reference line La toward the boundary line Lam (flow channel disposition condition 4).

In the first frame W1 of FIG. 8(a), the centroid Cfi of the fuel gas inlets Fin is disposed on the first side H1 (e.g., at the midpoint of the first side H1). The hatched strips on the first frame W1 have the same meanings as those of the second arrangement.

By virtue of such a configuration, the fourth arrangement yields an effect similar to that of the first arrangement. Also, as shown in FIG. 8(b), by means of "flow channel disposition condition 4" being met, region R5 into which low-temperature oxidizer gas (i.e., low-temperature air) is introduced from outside, and region R6 in which the generation of heat increases as a result of high temperature being established by reaction (electricity generation) and of high oxygen concentration being established overlap each other. Thus, since temperature distribution is uniformized to a higher extent, as shown in experimental example 1 to be described later, the fourth arrangement can attain compatibility between high electricity generation capability and higher durability.

### [Fifth arrangement]

Next, a fifth arrangement will be described; however, the description of contents similar to those of the first arrangement is omitted. In the following description, structural members similar to those of the first arrangement are denoted by the same reference numerals as those of the first arrangement.

The fuel cell apparatus 1 of the fifth arrangement meets the following "flow channel disposition condition 5" as well as "flow channel disposition condition 1" of the first arrangement with respect to the oxidizer gas flow channel and the fuel gas flow channel.

Specifically, in the fuel cell apparatus 1 of the fifth arrangement, as shown in FIG. 9(a), as viewed in the stacking direction, the centroid Cfo of the fuel gas outlets Fout is disposed at a position offset from the reference line Lf toward the boundary line Lfp by a distance of 0.3Xp to Xp; the centroid Cai of the oxidizer gas inlets Ain is disposed at a position offset from the reference line La toward the boundary line Lam by a distance of 0.6Ym to Ym; and the centroid Cao of the oxidizer gas outlets Aout is disposed at a position offset from the reference line La toward the boundary line Lap by a distance of 0.4Yp to 0.9Yp (flow channel disposition condition 5).

In the first frame W1 of FIG. 9(a), the centroid Cfi of the fuel gas inlets Fin is disposed on the first side H1 (e.g., at the midpoint of the first side H1). The hatched strips on the first frame W1 have the same meanings as those of the second arrangement.

By virtue of such a configuration, the fifth arrangement yields an effect similar to that of the first arrangement. Also, as shown in FIG. 9(b), by means of "flow channel disposition condition 5" being met, region R7 into which low-temperature oxidizer gas (i.e., low-temperature air) is introduced from outside, and region R8 in which the generation of heat increases as a result of high temperature being established by reaction (electricity generation) and of high oxygen concentration being established overlap each other; furthermore, there arises region R9 in which the generation of heat increases as a result of a fuel gas inflow region and an oxidizer gas outflow region coming into close proximity to each other. Thus, since temperature distribution becomes uniform to a higher extent, as shown in experimental example 1 to be described later, the fifth arrangement can attain compatibility between higher electricity generation capability and higher durability.

### [Sixth arrangement]

Next, a sixth arrangement will be described; however, the description of contents similar to those of the fifth arrangement is omitted. In the following description, structural members similar to those of the fifth arrangement are denoted by the same reference numerals as those of the fifth arrangement.

The fuel cell apparatus 1 of the sixth arrangement meets the following "flow channel disposition condition 6" as well as "flow channel disposition condition 1" of the first arrangement with respect to the oxidizer gas flow channel and the fuel gas flow channel.

Specifically, in the fuel cell apparatus 1 of the sixth arrangement, as shown in FIG. 10, as viewed in the stacking direction, the centroid Cfo of the fuel gas outlets Fout and the centroid Cai of the oxidizer gas inlets Ain are disposed as in the fifth arrangement, and the centroid Cao of the oxidizer gas outlets Aout is disposed at a position offset from the reference line La toward the boundary line Lap by a distance of 0.4Yp to 0.6Yp (flow channel disposition condition 6).

In the first frame W1 of FIG. 10, the centroid Cfi of the fuel gas inlets Fin is disposed on the first side H1 (e.g., at the midpoint of the first side H1). The hatched strips on the first frame W1 have the same meanings as those of the second arrangement.

By virtue of such a configuration, the sixth arrangement yields an effect similar to that of the fifth arrangement, and, as is apparent from experimental example 1 to be described later, the cell in-plane temperature distribution can be uniformized to a higher extent than in the fifth arrangement. Thus, the sixth arrangement can attain compatibility between higher electricity generation capability and higher durability.

### [Seventh arrangement]

Next, a seventh arrangement will be described; however, the description of contents similar to those of the first arrangement is omitted. In the following description, structural members similar to those of the first arrangement are denoted by the same reference numerals as those of the first arrangement.

As shown in FIG. 11, in the fuel cell apparatus 1 of the seventh arrangement, the single cell 17, the cathode insulating frame 23, the anode insulating frame 29, etc., have a rectangular shape as in the case of the first arrangement; however, the centroid Cfi of the fuel gas inlets Fin is greatly shifted in the horizontal direction of FIG. 11.

Here, for example, the centroid Cfi of the fuel gas inlets Fin is greatly offset rightward from the midpoint of the first side H1, and the centroid Cfo of the fuel gas outlets Fout is slightly offset rightward from the midpoint of the second side H2. That is, in FIG. 11, the centroid Cfi of the fuel gas inlets Fin is offset rightward from the centroid Cfo of the fuel gas outlets Fout.

Also, the centroid Cai of the oxidizer gas inlets Ain is greatly offset downward (i.e., to a position near an end portion of the single cell 17) from the midpoint of the third side H3, and the centroid Cfo of the oxidizer gas outlets Aout is greatly offset upward (i.e., to a position near an another end portion of the single cell 17) from the midpoint of the fourth side H4.

Even the seventh arrangement having such a configuration yields effects similar to those of the above arrangements by means of meeting "flow channel disposition condition 1" or meeting any one of "flow channel disposition condition 2" to "flow channel disposition condition 6," in addition to "flow channel disposition condition 1."

### [Experimental examples]

Next, experiments conducted to verify the effects of the present invention will be described.

### <Experimental example 1>

In experimental example 1, computer simulation was performed on an object model of experiment (experimental model 1) and a model of reference (reference model or reference cell) with respect to a planar solid oxide fuel cell apparatus of a one-tier electricity generation unit type using one single cell.

The operation of experimental model 1 was simulated such that while the position of the centroid Cfo of the fuel gas inlets was fixed, the positions of the centroid Cfi of the fuel gas outlets, the centroid Cai of the oxidizer gas inlets, and the centroid Cao of the oxidizer gas outlets were varied to obtain an output voltage and the temperature distribution (the difference between a maximum temperature (max) and a minimum temperature (min)) of the single cell surface with respect to the individual cases of the positions. Also, the output voltage and the temperature distribution of the reference model were obtained. A change of the output voltage and a change of the temperature distribution of experimental model 1 in relation to the reference model were examined.

As will be described in detail below, experimental example 1 verified effects of the flow channel positions of the second arrangement (see Table 1 and FIG. 6), the flow channel positions of the third arrangement (see Table 2 and FIG. 7), the flow channel positions of the fourth arrangement (see Table 3 and FIG. 8), and the flow channel positions of the fifth and sixth arrangements (see Table 4 and FIGS. 9 and 10) .

### a) Structure of experimental model 1

The basic structure of experimental model 1 is similar to that of the electricity generation unit in each of the above arrangements.

More specifically, in experimental model 1, the planar shapes (as viewed in the stacking direction) of members, such as the electricity generation unit, the single cell, the fuel gas chamber, and the oxidizer gas chamber, were square, and the members had the following sizes. Materials of the members were similar to those of the above arrangements.

Sizes in plan view
Fuel gas chamber and oxidizer gas chamber: 12 cm × 12 cm, single cell: 9 cm × 9 cm
Also, in experimental model 1, as shown in the following Tables 1 to 4, the positions of the centroid Cfo of the fuel gas outlets, the centroid Cai of the oxidizer gas inlets, and the centroid Cao of the oxidizer gas outlets were varied. Meanwhile, the position of the centroid Cfi of the fuel gas inlets was the midpoint of the first side H1 of the first frame W1 of experimental model 1 as shown in, for example, FIG. 6.

### b) Structure of reference model

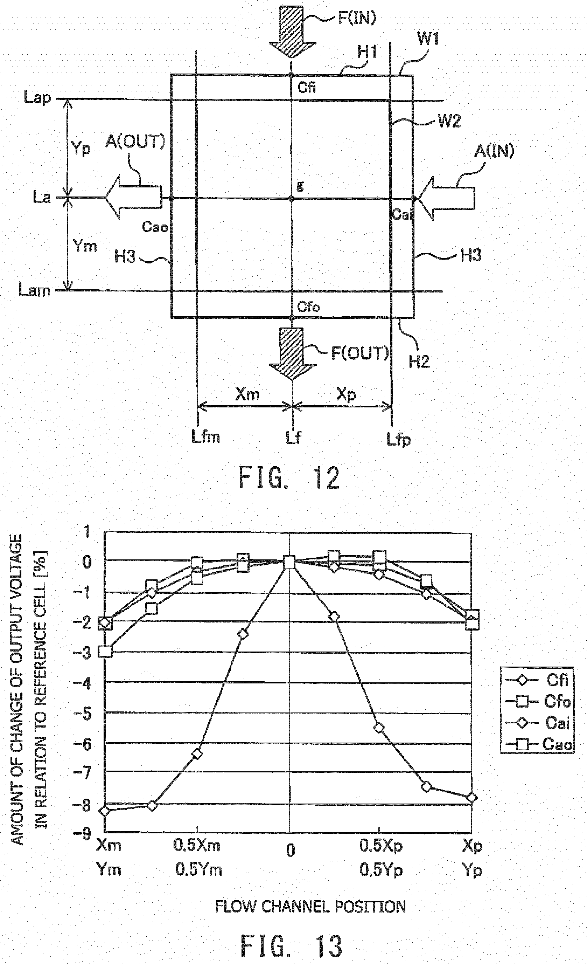

In the reference model, as shown in FIG. 12, in the first frame W1, the centroid Cfi of the fuel gas inlets was disposed at the midpoint of the first side H1; the centroid Cfo of the fuel gas outlets was disposed at the midpoint of the second side H2; the centroid Cai of the oxidizer gas inlets was disposed at the midpoint of the third side H3; and the centroid Cao of the oxidizer gas outlets was disposed at the midpoint of the fourth side H4. Other configurational features are similar to those of experimental model 1.

### c) Operating conditions of experimental model 1 and reference model

Experiment model 1 and the reference model were operated as follows: fuel gas (e.g., a mixed gas of hydrogen, nitrogen, and water (water vapor)) and oxidizer gas (e.g., air (a mixed gas of oxygen and nitrogen)) were supplied at a fixed flow rate for a predetermined time at a predetermined electricity generation temperature of the fuel cell apparatus.

### d) Contents of experiments

In experimental example 1, simulation was performed under the above-mentioned operating conditions while the positions of the centroid Cfo of the fuel gas outlets, the centroid Cai of the oxidizer gas inlets, and the centroid Cao of the oxidizer gas outlets were varied as shown in the following Tables 1 to 4, thereby obtaining the output voltage of experimental model 1. Similarly, the reference model underwent simulation under the same experimental conditions to obtain the output voltage thereof.

Then, the amount dVolt [%] of change of output voltage of experimental model 1 in relation to the reference model was calculated. The results of the calculation are shown in the following Tables 1 to 4. In the tables, the sign - (minus) of the amount dVolt of change of output voltage indicates that the output voltage is lower than that of the reference model.

Also, experimental model 1 underwent simulation under operating conditions similar to those of the above case of obtaining the output voltage while the centroid positions were varied similarly to the case, whereby the maximum cell in-plane temperature (max) and the minimum cell in-plane temperature (min) of the single cell were obtained, and temperature difference ΔT (max - min) was calculated. Similarly, the temperature difference ΔT was calculated for the reference model.

Then, the amount dT [°C] of change of temperature difference ΔT of experimental model 1 in relation to the reference model was calculated. The results of the calculation are shown in the following Tables 1 to 4. In the tables, the sign - (minus) of the amount dT of change of the temperature difference ΔT indicates that the temperature difference ΔT becomes small.

In the following Tables 1 to 4, in the case of use of Xp for expression of the position of the centroid Cfo of the fuel gas outlets, the centroid Cfo is offset from Lf toward Lfp, and, in the case of use of Xm, the centroid Cfo is offset from Lf toward Lfm. In the case of use of 0, the centroid Cfo is positioned on Lf.

In the case of use of Yp for expression of the positions of the centroid Cai of the oxidizer gas inlets and the centroid Cao of the oxidizer gas outlets, the centroid Cai and the centroid Cao are offset from La toward Lap, and, in the case of use of Ym, the centroid Cai and the centroid Cao are offset from La toward Lam. In the case of use of 0, the centroid Cai and the centroid Cao are positioned on La.

### e) Results of experiments

The contents and results of experiments will next be described in detail with reference to the tables.

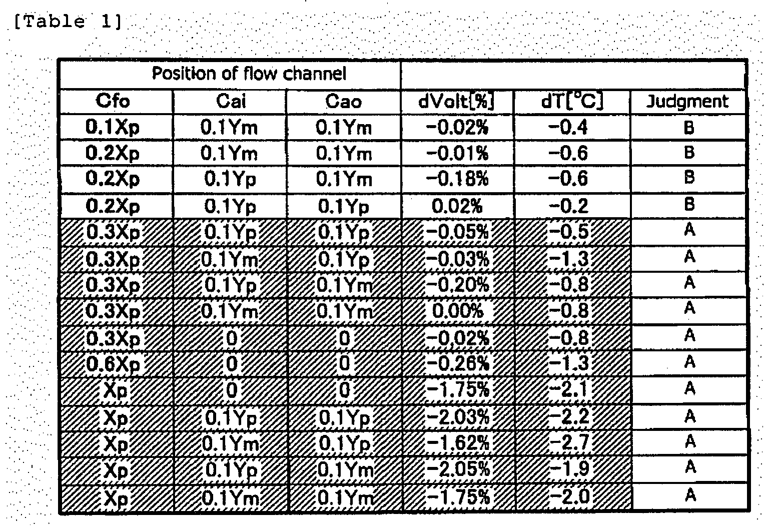

Table 1 shows the results of an experiment conducted for verifying the flow channel condition of the second arrangement (flow channel condition 2: see FIG. 6). That is, Table 1 shows the results of the experiment conducted while the position of the centroid Cfo of the fuel gas outlets was varied.

In view of manufacturing variations, the centroid Cai of the oxidizer gas inlets and the centroid Cao of the oxidizer gas outlets were considered to be disposed at any position within a range of 10% of Yp to 10% of Ym from the midpoint of the third side H3 and a range of 10% of YP to 10% of Ym from the midpoint of the fourth side H4, respectively.

The criteria employed in Table 1 are as follows.

### <Criteria>

A: A drop in output voltage is 3.5% or less, and a reduction in temperature difference ΔT is 0.5°C or more.
B: The conditions of the above judgment A are not met.

As is apparent from Table 1, when the position of the centroid Cfo of the fuel gas outlets falls within a range of 0.3Xp to Xp (see the hatched portion of Table 1), the amount dVolt of change of output voltage of experimental model 1 is small (i.e., a drop in output voltage is 2.05% or less), and the amount dT of change of temperature difference ΔT of experimental model 1 is large (i.e., the temperature difference is improved by 0.5°C or more to thereby become small). That is, output voltage does not deteriorate much, and the uniformity of temperature distribution is improved.

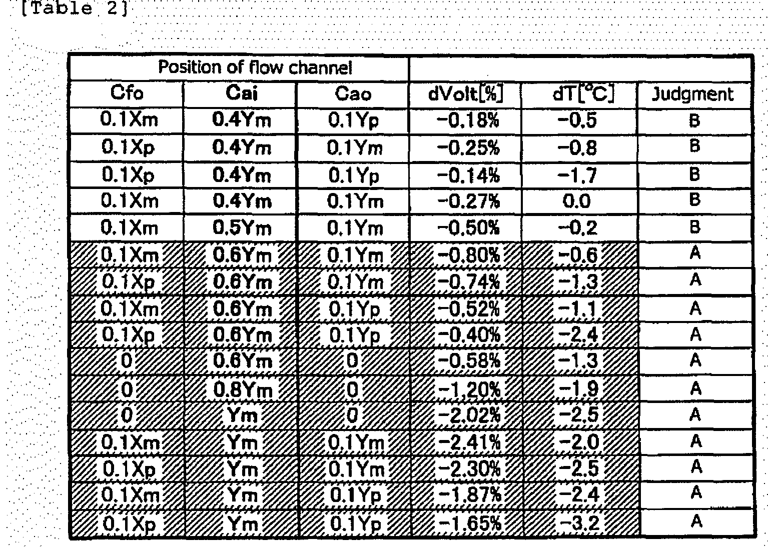

Table 2 shows the results of an experiment conducted for verifying the flow channel condition of the third arrangement (flow channel disposition condition 3: see FIG. 7). That is, Table 2 shows the results of the experiment conducted while the position of the centroid Cai of the oxidizer gas inlets was varied.

In view of manufacturing variations, the centroid Cfo of the fuel gas outlets and the centroid Cao of the oxidizer gas outlets were considered to be disposed at any position within a range of 10% of Xm to 10% of Xp from the midpoint of the second side H2 and a range of 10% of Yp to 10% of Ym from the midpoint of the fourth side H4, respectively.
The criteria employed in Table 2 are as follows.

### <Criteria>

A: A drop in output voltage is 3.5% or less, and a reduction in temperature difference ΔT is 0.5°C or more.
B: The conditions of the above judgment A are not met.

As is apparent from Table 2, when the position of the centroid Cai of the oxidizer gas inlets falls within a range of 0.6 Ym to Ym (see the hatched portion of Table 2), the amount dVolt of change of output voltage of experimental model 1 is small (i.e., a drop in output voltage is 2.41 % or less), and the amount dT of change of temperature difference ΔT of experimental model 1 is large (i.e., the temperature difference is improved by 0.6°C or more to thereby become small). That is, output voltage does not deteriorate much, and the uniformity of temperature distribution is improved.

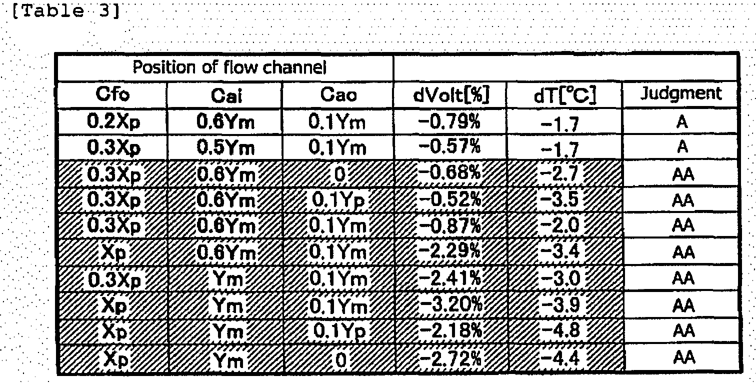

Table 3 shows the results of an experiment conducted for verifying the flow channel condition of the fourth arrangement (flow channel disposition condition 4: see FIG. 8). That is, Table 3 shows the results of the experiment conducted while the positions of the centroid Cfo of the fuel gas outlets and the centroid Cai of the oxidizer gas inlets were varied.

In view of manufacturing variations, the centroid Cao of the oxidizer gas outlets was considered to be disposed at any position within a range of 10% ofYp to 10% of Ym from the midpoint of the fourth side H4.
The criteria employed in Table 3 are as follows.

### <Criteria>

A: A drop in output voltage is 3.5% or less, and a reduction in temperature difference ΔT is 0.5°C or more.
AA: A drop in output voltage is 3.5% or less, and a reduction in temperature difference ΔT is 2.0°C or more.

As is apparent from Table 3, when the position of the centroid Cfo of the fuel gas outlets falls within a range of 0.3 Xp to Xp (the condition of the centroid Cfo of the fuel gas outlets in flow channel disposition condition 2), and the position of the centroid Cai of the oxidizer gas inlets falls within a range of 0.6 Ym to Ym (the condition of the centroid Cai of the oxidizer gas inlets in flow channel disposition condition 3) (see the hatched portion of Table 3), the amount dVolt of change of output voltage of experimental model 1 is small (i.e., a drop in output voltage is 3.20% or less), and the amount dT of change of temperature difference ΔT of experimental model 1 is larger (i.e., the temperature difference is improved by 2.0°C or more to thereby become small). That is, output voltage does not deteriorate much, and the uniformity of temperature distribution is improved further.

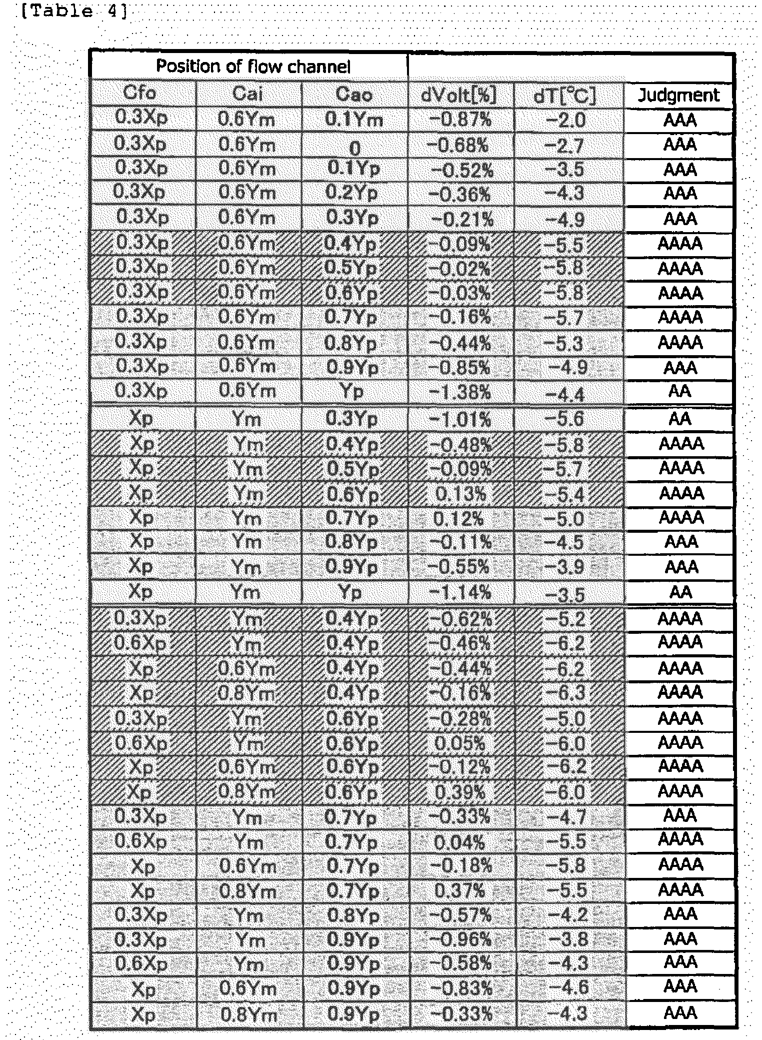

Table 4 shows the results of an experiment conducted for verifying the flow channel condition of the fifth arrangement (flow channel disposition condition 5: see FIG. 9) and the flow channel condition of the sixth arrangement (flow channel disposition condition 6: see FIG. 10). That is, Table 4 shows the results of the experiment conducted while the position of the centroid Cao of the oxidizer gas outlets was varied with the conditions of the centroid Cfo of the fuel gas outlets and the centroid Cai of the oxidizer gas inlets in flow channel disposition condition 4 being met.

The criteria employed in Table 4 are as follows.

### <Criteria>

AA: A drop in output voltage is 3.5% or less, and a reduction in temperature difference ΔT is 2.0°C or more.
AAA: A drop in output voltage is 1.0% or less, and a reduction in temperature difference ΔT is 2.0°C or more.
AAAA: A drop in output voltage is 1.0% or less, and a reduction in temperature difference ΔT is 5.0°C or more.

As is apparent from Table 4, when the position of the centroid Cfo of the fuel gas outlets falls within a range of 0.3 Xp to Xp, the position of the centroid Cai of the oxidizer gas inlets falls within a range of 0.6 Ym to Ym, and the position of the centroid Cao of the oxidizer gas outlets falls within a range of 0.4 Yp to 0.9 Yp (see the hatched and shaded portions in Table 4), the amount dVolt of change of output voltage of experimental model 1 is smaller (i.e., a drop in output voltage is 0.85% or less), and the amount dT of change of temperature difference ΔT of experimental model 1 is larger (i.e., the temperature difference is improved by 3.8°C or more to thereby become small). That is, output voltage does not deteriorate to a greater degree, and the uniformity of temperature distribution is further improved.

Also, as is apparent from Table 4, when the position of the centroid Cfo of the fuel gas outlets falls within a range of 0.3 Xp to Xp, the position of the centroid Cai of the oxidizer gas inlets falls within a range of 0.6 Ym to Ym, and the position of the centroid Cao of the oxidizer gas outlets falls within a range of 0.4 Yp to 0.6 Yp (see the hatched portion in Table 4), the amount dVolt of change of output voltage of experimental model 1 is far smaller (i.e., a drop in output voltage is 0.62% or less), and the amount dT of change of temperature difference ΔT of experimental model 1 is far larger (i.e., the temperature difference is improved by 5.0°C or more to thereby become small). That is, output voltage does not deteriorate to a far greater degree, and the uniformity of temperature distribution is improved to a far greater degree.

### <Experimental example 2>

In experimental example 2, an experiment (simulation) was performed on experimental model 2 and the reference model (reference cell) to verify the basis which experimental example 1 has in setting the positions of the centroid Cfo of the fuel gas outlets, the centroid Cai of the oxidizer gas inlets, and the centroid Cao of the oxidizer gas outlets with the position of the centroid Cfi of the fuel gas inlets employed as a reference position.

Experimental example 2 used the reference model, and experimental model 2 in which, as shown in the following Table 5 and FIG. 13, the position of one flow channel (centroid) was varied (the positions of the remaining three flow channels were the same as those of the reference model).

Output voltages of the reference model and experimental model 2 were obtained for the case of generating electricity under the operating conditions of experimental example 1, and the obtained output voltages were compared between the reference model and experimental model 2. Specifically, there was obtained the amount of change of output voltage of experimental model 2 in relation to the reference model. The obtained results are shown in Table 5 and FIG. 13.

The horizontal axis of FIG. 13 indicates offsets of the positions of flow channels (i.e., the centroid Cfi of the fuel gas inlets, the centroid Cfo of the fuel gas outlets, the centroid Cai of the oxidizer gas inlets, and the centroid Cao of the oxidizer gas outlets) on sides from midpoints, and an offset of 0 indicates that the position is located at a midpoint.

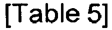

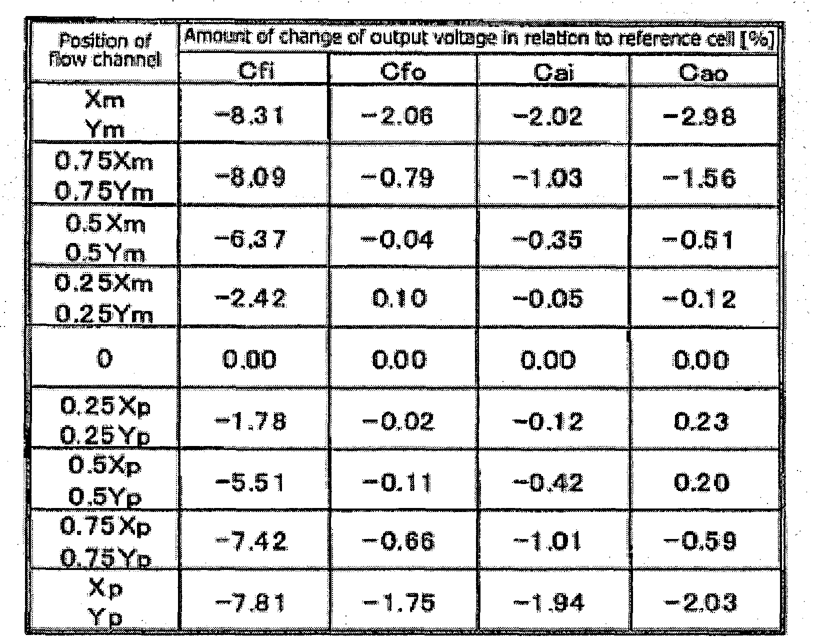

As is apparent from Table 5 and FIG. 13, the output voltage is significantly sensitive to the position of the centroid Cfi of the fuel gas inlets as compared with the positions of the other flow channels (i.e., the centroid Cfo of the fuel gas outlets, the centroid Cai of the oxidizer gas inlets, and the centroid Cao of the oxidizer gas outlets). Also, when the position of the centroid Cfi of the fuel gas inlets is 0; i.e., when the position of the centroid Cfi is located at the center of the cell width crossing the direction of fuel flow (i.e., the midpoint of the first side H1), the output voltage becomes maximal. Therefore, it is preferred that the position of the centroid Cfi of the fuel gas inlets be used as a reference position.

The present invention has been described with reference to the arrangements. However, the present invention is not limited thereto, but may be embodied in various other forms.
(1) For example, the present invention can be applied to a solid oxide fuel cell (SOFC) apparatus which uses ZrO₂ ceramic or the like as electrolyte, a polymer electrolyte fuel cell (PEFC) apparatus which uses a polymer electrolyte membrane as electrolyte, a molten carbonate fuel cell (MCFC) apparatus which uses Li-Na/K carbonate as electrolyte, a phosphoric-acid fuel cell (PAFC) apparatus which uses phosphoric acid as electrolyte, etc.
(2) In the present invention, the planar shapes of the single cell, the electricity generation unit, the fuel cell stack, etc., are not limited to quadrangular shapes (e.g., a rectangular shape, a square shape, a diamond shape, and a trapezoidal shape), but can employ various other shapes such as polygons (e.g., hexagon and octagon) and curved shapes (e.g., a circular shape and an elliptic shape).
(3) Further, the fuel cell apparatus of the present invention can employ the form of a single-tier fuel cell apparatus which uses one planar single cell (electricity generation unit) in addition to the form of a fuel cell stack in which a plurality of planar single cells (electricity generation units) are stacked. Also, of all the electricity generation units of the fuel cell stack, only one or a plurality of electricity generation units may have the structure of the present invention.

### DESCRIPTION OF REFERENCE NUMERALS

1: planar fuel cell apparatus (fuel cell stack)
7: electricity generation unit
17: single fuel cell
31: oxidizer gas chamber (air flow channel)
35: fuel gas chamber (fuel flow channel)
55: solid electrolyte layer
59: anode layer
57: cathode layer
Fin: fuel gas inlet
Fout: fuel gas outlet
Ain: oxidizer gas inlet
Aout: oxidizer gas outlet

## Claims

1. A planar fuel cell apparatus comprising:
a single fuel cell (17) having an anode layer (59), a cathode layer (57), and a solid electrolyte layer (55) sandwiched therebetween;
a fuel gas chamber (35) disposed on an anode layer (59) side;
an oxidizer gas chamber (31) disposed on a cathode layer (57) side;
one or a plurality of fuel gas inlets (Fin) through which fuel gas flows into the fuel gas chamber (35), and one or a plurality of fuel gas outlets (Fout) through which the fuel gas flows out from the fuel gas chamber (35); and
one or a plurality of oxidizer gas inlets (Ain) through which oxidizer gas flows into the oxidizer gas chamber (31), and one or a plurality of oxidizer gas outlets (Aout) through which the oxidizer gas flows out from the oxidizer gas chamber (31),
the planar fuel cell apparatus being **characterized in that**, as viewed in a stacking direction,
a first rectilinear line (L1) which connects a centroid Cfi of the fuel gas inlet(s) (Fin) and a centroid Cfo of the fuel gas outlet(s) (Fout), and a second rectilinear line (L2) which connects a centroid Cai of the oxidizer gas inlet(s) (Ain) and a centroid Cao of the oxidizer gas outlet(s) (Aout) cross each other, and
the centroid Cfo of the fuel gas outlet(s) (Fout) is located closer to the centroid Cai of the oxidizer gas inlet(s) (Ain) than to the centroid Cao of the oxidizer gas outlet(s) (Aout), wherein as viewed in the stacking direction,
the centroid Cfo of the fuel gas outlet(s) (Fout) is disposed at a position offset from a reference line Lf toward a boundary line Lfp by a distance of 0.3Xp to Xp;
the centroid Cai of the oxidizer gas inlet(s) (Ain) is disposed at a position located a distance of 0.1Yp or less from a reference line La toward a boundary line Lap or a distance of 0.1Ym or less from the reference line La toward a boundary line Lam; and
the centroid Cao of the oxidizer gas outlet(s) (Aout) is disposed at a position located a distance of 0.1Yp or less from the reference line La toward the boundary line Lap or a distance of 0.1Ym or less from the reference line La toward the boundary line Lam,
where Lf is a rectilinear reference line on the single fuel cell (17) which passes through the centroid Cfi of the fuel gas inlet(s) (Fin) and through a centroid g of the single fuel cell (17);
La is a rectilinear reference line on the single fuel cell (17) which is orthogonal to the reference line Lf and passes through the centroid g;
Lfp is a rectilinear boundary line which extends on the single fuel cell (17), is located closer to the centroid Cai of the oxidizer gas inlet(s) (Ain) than to the reference line Lf, and is in parallel with and most distant from the reference line Lf;
Lfm is a rectilinear boundary line which extends on the single fuel cell (17), is located closer to the centroid Cao of the oxidizer gas outlet(s) (Aout) than to the reference line Lf, and is in parallel with and most distant from the reference line Lf;
Lap is a rectilinear boundary line which extends on the single fuel cell (17), is located closer to the centroid Cfi of the fuel gas inlet(s) (Fin) than to the reference line La, and is in parallel with and most distant from the reference line La;
Lam is a rectilinear boundary line which extends on the single fuel cell (17), is located closer to the centroid Cfo of the fuel gas outlet(s) (Fout) than to the reference line La, and is in parallel with and most distant from the reference line La;
Xp is the shortest distance between the reference line Lf and the boundary line Lfp;
Xm is the shortest distance between the reference line Lf and the boundary line Lfm;
Yp is the shortest distance between the reference line La and the boundary line Lap; and
Ym is the shortest distance between the reference line La and the boundary line Lam.

2. A planar fuel cell apparatus comprising a plurality of stacked planar fuel cell units (7) each comprising:
a single fuel cell (17) having an anode layer (59), a cathode layer (57), and a solid electrolyte layer (55) sandwiched therebetween;
a fuel gas chamber (35) disposed on an anode layer (59) side;
an oxidizer gas chamber (31) disposed on a cathode layer (57) side;
one or a plurality of fuel gas inlets (Fin) through which fuel gas flows into the fuel gas chamber (35), and one or a plurality of fuel gas outlets (Fout) through which the fuel gas flows out from the fuel gas chamber (35); and
one or a plurality of oxidizer gas inlets (Ain) through which oxidizer gas flows into the oxidizer gas chamber (31), and one or a plurality of oxidizer gas outlets (Aout) through which the oxidizer gas flows out from the oxidizer gas chamber (31),
the planar fuel cell apparatus being **characterized in that** at least any one of the planar fuel cell units (7) is the planar fuel cell apparatus according to claim 1.

## Patentansprüche

1. Planare Brennstoffzellenvorrichtung, umfassend:
eine einzelne Brennstoffzelle (17) mit einer Anodenschicht (59), einer Kathodenschicht (57) und einer Festelektrolytschicht (55), die dazwischen angeordnet ist;
eine Brenngaskammer (35), die auf einer Anodenschicht (59) angeordnet ist;
eine Oxidationsgaskammer (31), die auf einer Kathodenschichtseite (57) angeordnet ist;
einen oder mehrere Brenngaseinlässe (Fin), durch die Brenngas in die Brenngaskammer (35) strömt, und einen oder mehrere Brenngasauslässe (Fout), durch die das Brenngas aus der Brenngaskammer (35) austritt; und
einen oder mehrere Oxidationsgaseinlässe (Ain), durch die Oxidationsgas in die Oxidationsgaskammer (31) strömt, und einen oder mehrere Oxidationsgasauslässe (Aout), durch die das Oxidationsgas aus der Oxidationsgaskammer (31) austritt,
wobei die planare Brennstoffzellenvorrichtung **dadurch gekennzeichnet ist, dass** sie, betrachtet in einer Stapelrichtung,
eine erste geradlinige Linie (L1), die einen Schwerpunkt Cfi des/der Brenngaseinlasses/einlässe (Fin) und einen Schwerpunkt Cfo des/der Brenngasauslasses/auslässe (Fout) verbindet, und eine zweite geradlinige Linie (L2), die einen Schwerpunkt Cai des/der Oxidationsgaseinlasses/einlässe (Ain) und einen Schwerpunkt Cao des/der Oxidationsgasauslasses/auslässe (Aout) miteinander verbindet, einander kreuzen, und
in Stapelrichtung gesehen der Schwerpunkt Cfo des/der Brenngaseinlasses/einlässe (Fout) näher am Schwerpunkt Cai des/der Oxidationsgaseinlasses/einlässe (Ain) als am Schwerpunkt Cao des/der Oxidationsgasauslasses/auslässe (Aout) angeordnet ist,
der Schwerpunkt Cfo des/der Brenngasauslasses/auslässe (Fout) an einer Position angeordnet ist, die von einer Referenzlinie Lf zu einer Begrenzungslinie Lfp um einen Abstand von 0,3Xp zu Xp versetzt ist;
der Schwerpunkt Cai des/der Oxidationsgaseinlasses/einlässe (Ain) an einer Position angeordnet ist, die sich in einem Abstand von 0,1Yp oder weniger von einer Referenzlinie La zu einer Begrenzungslinie Lap oder in einem Abstand von 0,1Ym oder weniger von der Referenzlinie La zu einer Begrenzungslinie Lam befindet; und
der Schwerpunkt Cao des/der Oxidationsgasauslasses/auslässe (Aout) an einer Position angeordnet ist, die sich in einem Abstand von 0,1Yp oder weniger von der Referenzlinie La zur Begrenzungslinie Lap oder in einem Abstand von 0,1Ym oder weniger von der Referenzlinie La zur Begrenzungslinie Lam befindet,
wobei Lf eine geradlinige Referenzlinie auf der einzelnen Brennstoffzelle (17) ist, die durch den Schwerpunkt Cfi des/der Brenngaseinlasses/einlässe (Fin) und durch einen Schwerpunkt g der einzelnen Brennstoffzelle (17) verläuft;
La eine geradlinige Referenzlinie auf der einzelnen Brennstoffzelle (17) ist, die orthogonal zur Referenzlinie Lf verläuft und durch den Schwerpunkt g verläuft;
Lfp eine geradlinige Begrenzungslinie ist, die sich auf der einzelne Brennstoffzelle (17) erstreckt, und näher am Schwerpunkt Cai des/der Oxidationsgaseinlasses/einlässe (Ain) als an der Referenzlinie Lf liegt und parallel und am weitesten von der Referenzlinie Lf entfernt ist;
Lfm eine geradlinige Begrenzungslinie ist, die sich auf der einzelne Brennstoffzelle (17) erstreckt, und näher am Schwerpunkt Cao des/der Oxidationsgasauslasses/auslässe (Aout) als an der Referenzlinie Lf liegt und parallel und am weitesten von der Referenzlinie Lf entfernt ist;
Lap eine geradlinige Begrenzungslinie ist, die sich auf der einzelne Brennstoffzelle (17) erstreckt, und näher am Schwerpunkt Cfi des/der Brenngaseinlasses/einlässe (Fin) als an der Referenzlinie La liegt und parallel zur Referenzlinie La verläuft und von dieser am weitesten entfernt ist;
Lam ist eine geradlinige Begrenzungslinie, die sich auf der einzelne Brennstoffzelle (17) erstreckt, und näher am Schwerpunkt Cfo des/der Brenngasauslasses/auslässe (Fout) als an der Referenzlinie La liegt und parallel und am weitesten von der Referenzlinie La entfernt ist;
Xp der kürzeste Abstand zwischen der Referenzlinie Lf und der Begrenzungslinie Lfp ist;
Xm der kürzeste Abstand zwischen der Referenzlinie Lf und der Begrenzungslinie Lfm ist;
Yp der kürzeste Abstand zwischen der Referenzlinie La und der Begrenzungslinie Lap ist; und
Ym der kürzeste Abstand zwischen der Referenzlinie La und der Begrenzungslinie Lam ist.

2. Planare Brennstoffzellenvorrichtung, umfassend eine Vielzahl von gestapelten planaren Brennstoffzelleneinheiten (7), die jeweils umfassen:
eine einzelne Brennstoffzelle (17) mit einer Anodenschicht (59), einer Kathodenschicht (57) und einer Festelektrolytschicht (55), die dazwischen angeordnet ist;
eine Brenngaskammer (35), die auf einer Anodenschicht (59) angeordnet ist;
eine Oxidationsgaskammer (31), die auf einer Kathodenschichtseite (57) angeordnet ist;
einen oder mehrere Brenngaseinlässe (Fin), durch die Brenngas in die Brenngaskammer (35) strömt, und einen oder mehrere Brenngasauslässe (Fout), durch die das Brenngas aus der Brenngaskammer (35) austritt; und
einen oder mehrere Oxidationsgaseinlässe (Ain), durch die Oxidationsgas in die Oxidationsgaskammer (31) strömt, und einen oder mehrere Oxidationsgasauslässe (Aout), durch die das Oxidationsgas aus der Oxidationsgaskammer (31) austritt,
wobei die planare Brennstoffzellenvorrichtung **dadurch gekennzeichnet ist, dass** mindestens eine der planaren Brennstoffzelleneinheiten (7) die planare Brennstoffzellenvorrichtung gemäß Anspruch 1 ist.

## Revendications

1. Appareil à pile à combustible plan comprenant :
une pile à combustible unique (17) ayant une couche d'anode (59), une couche de cathode (57), et une couche d'électrolyte solide (55) enserrée entre celles-ci ;
une chambre de combustible gazeux (35) disposée sur un côté de la couche d'anode (59) ;
une chambre d'oxydant gazeux (31) disposée sur un côté de la couche de cathode (57) ;
une ou une pluralité d'entrées de combustible gazeux (Fin) à travers lesquelles un combustible gazeux s'écoule dans la chambre de combustible gazeux (35), et une ou une pluralité de sorties de combustible gazeux (Fout) à travers lesquelles le combustible gazeux s'écoule hors de la chambre de combustible gazeux (35) ; et
une ou une pluralité d'entrées d'oxydant gazeux (Ain) à travers lesquelles l'oxydant gazeux s'écoule dans la chambre d'oxydant gazeux (31), et une ou une pluralité de sorties d'oxydant gazeux (Aout) à travers lesquelles l'oxydant gazeux s'écoule hors de la chambre d'oxydant gazeux (31),
l'appareil à pile à combustible plan étant **caractérisé en ce que**, lorsqu'observé dans une direction d'empilement,
une première ligne rectiligne (L1) qui relie un centroïde Cfi de la ou des entrées de combustible gazeux (Fin) et un centroïde Cfo de la ou des sorties de combustible gazeux (Fout), et une seconde ligne rectiligne (L2) qui relie un centroïde Cai de la ou des entrées d'oxydant gazeux (Ain) et un centroïde Cao de la ou des sorties d'oxydant gazeux (Aout) se croisent l'une et l'autre, et
le centroïde Cfo de la ou des sorties de combustible gazeux (Fout) est situé plus près du centroïde Cai de la ou des entrées de combustible gazeux (Ain) que du centroïde Cao de la ou des sorties d'oxydant gazeux (Aout), dans lequel lorsqu'observé dans la direction d'empilement,
le centroïde Cfo de la ou des sorties de combustible gazeux (Fout) est disposé à une position décalée d'une ligne de référence Lf vers une ligne frontière Lfp d'une distance allant de 0,3Xp à Xp ;
le centroïde Cai de la ou des entrées d'oxydant gazeux (Ain) est disposé à une position située à une distance égale à 0,1Yp ou moins d'une ligne de référence La vers une ligne frontière Lap ou à une distance égale à 0,1Ym ou moins de la ligne de référence La vers une ligne frontière Lam ; et
le centroïde Cao de la ou des sorties d'oxydant gazeux (Aout) est disposé à une position située à une distance égale à 0,1Yp ou moins de la ligne de référence La vers la ligne frontière Lap ou à une distance égale à 0,1Ym ou moins de la ligne de référence La vers la ligne frontière Lam,
où Lf est une ligne de référence rectiligne sur la pile à combustible unique (17) qui passe à travers le centroïde Cfi de la ou des entrées de combustible gazeux (Fin) et à travers un centroïde g de la pile à combustible unique (17) ;
La est une ligne de référence rectiligne sur la pile à combustible unique (17) qui est orthogonale à la ligne de référence Lf et qui passe à travers le centroïde g ;
Lfp est une ligne frontière rectiligne qui s'étend sur la pile à combustible unique (17), se situe plus près du centroïde Cai de la ou des entrées d'oxydant gazeux (Ain) que de la ligne de référence Lf, et est parallèle à la ligne de référence Lf, et la plus éloignée de celle-ci ;
Lfm est une ligne frontière rectiligne qui s'étend sur la pile à combustible unique (17), se situe plus près du centroïde Cao de la ou des sorties d'oxydant gazeux (Aout) que de la ligne de référence Lf, et est parallèle à la ligne de référence Lf, et la plus éloignée de celle-ci ;
Lap est une ligne frontière rectiligne qui s'étend sur la pile à combustible unique (17), se situe plus près du centroïde Cfi de la ou des entrées de combustible gazeux (Fin) que de la ligne de référence La, et est parallèle à la ligne de référence La, et la plus éloignée de celle-ci ;
Lam est une ligne frontière rectiligne qui s'étend sur la pile à combustible unique (17), se situe plus près du centroïde Cfo de la ou des sorties de combustible gazeux (Fout) que de la ligne de référence La, et est parallèle à la ligne de référence La, et la plus éloignée de celle-ci ;
Xp est la distance la plus courte entre la ligne de référence Lf et la ligne frontière Lfp ;
Xm est la distance la plus courte entre la ligne de référence Lf et la ligne frontière Lfm ;
Yp est la distance la plus courte entre la ligne de référence La et la ligne frontière Lap ; et
Ym est la distance la plus courte entre la ligne de référence La et la ligne frontière Lam.

2. Appareil à pile à combustible plan comprenant une pluralité d'unités de pile à combustible planes empilées (7) comprenant chacune :
une pile à combustible unique (17) ayant une couche d'anode (59), une couche de cathode (57), et une couche d'électrolyte solide (55) enserrée entre celles-ci ;
une chambre de combustible gazeux (35) disposée sur un côté de la couche d'anode (59) ;
une chambre d'oxydant gazeux (31) disposée sur un côté de la couche de cathode (57) ;
une ou une pluralité d'entrées de combustible gazeux (Fin) à travers lesquelles un combustible gazeux s'écoule dans la chambre de combustible gazeux (35), et une ou une pluralité de sorties de combustible gazeux (Fout) à travers lesquelles le combustible gazeux s'écoule hors de la chambre de combustible gazeux (35) ; et
une ou une pluralité d'entrées d'oxydant gazeux (Ain) à travers lesquelles l'oxydant gazeux s'écoule dans la chambre d'oxydant gazeux (31), et une ou une pluralité de sorties d'oxydant gazeux (Aout) à travers lesquelles l'oxydant gazeux s'écoule hors de la chambre d'oxydant gazeux (31),
l'appareil à pile à combustible plan étant **caractérisé en ce qu'**au moins l'une quelconque des unités de pile à combustible planes (7) est l'appareil à pile à combustible plan selon la revendication 1.
